# EUROPÄISCHE PATENTSCHRIFT

(11) **EP 3 939 227 B1**
(45) Veröffentlichungstag und Bekanntmachung des Hinweises auf die Patenterteilung: **21.05.2025**
(21) Anmeldenummer: 20711884.5
(22) Anmeldetag: 13.03.2020
(51) Int. Cl.: H04L 9/40, H04L 67/12, H04L 67/565

(54) **VERFAHREN UND KOMMUNIKATIONSSTEUERSYSTEM ZUR BEEINFLUSSUNG VON KOMMUNIKATION IN EINEM KOMMUNIKATIONSNETZWERK**
METHOD AND COMMUNICATION CONTROL SYSTEM FOR INFLUENCING COMMUNICATION IN A COMMUNICATION NETWORK
PROCÉDÉ ET SYSTÈME DE COMMANDE DE COMMUNICATION POUR INFLUENCER LA COMMUNICATION DANS UN RÉSEAU DE COMMUNICATION

(30) Priorität: 14.03.2019 DE 102019106543
(43) Veröffentlichungstag der Anmeldung: 19.01.2022
(73) Patentinhaber: Anapur AG, 68163 Mannheim (DE)
(72) Erfinder: KRUSCHITZ, Erwin, 68163 Mannheim (DE)
(74) Vertreter: Epping - Hermann - Fischer
(86) Internationale Anmeldenummer: PCT/EP2020/056958
(87) Internationale Veröffentlichungsnummer: WO 2020/183012

(56) Entgegenhaltungen:
- WO-A1-2018/024809
- KR-A- 20170 133 790
- US-A1- 2014 123 276
- US-A1- 2017 295 031
- US-B2- 9 009 084

## Beschreibung

Die Erfindung betrifft ein Verfahren zur Steuerung bzw. Beeinflussung von Kommunikation innerhalb eines Kommunikationsnetzwerkes. Ferner betrifft die Erfindung ein Kommunikationssteuersystem zur Steuerung bzw. Beeinflussung von Kommunikation wenigstens einer Komponente innerhalb eines Kommunikationsnetzwerkes.

Aufgrund der fortschreitenden Entwicklung von immer komplexer werdenden technischen Systemen, z. B. Systemen in denen informatische und/oder softwaretechnische Komponenten auf der einen Seite mit mechanischen und/oder elektronischen Komponenten auf der anderen Seite interagieren oder miteinander verzahnt werden, spielt eine Kommunikation zwischen den Komponenten bzw. zwischen dem Menschen und den Komponenten und das Handling einer solchen Kommunikation, nicht zuletzt aus Sicherheitsgründen, eine immer wichtigere Rolle. Denn die Kommunikation zwischen den Komponenten bildet quasi das Rückgrat solcher Systeme. Beispielsweise kann eine zufällige Störung oder vorsätzliche Manipulation dieser Kommunikation selbst oder eine zufällige Störung oder vorsätzliche Manipulation von Komponenten eines Systems zu unerwünschten oder unvorhersehbaren Auswirkungen im System führen.

Bestehende Lösungen sehen vor, dass Kommunikation zwischen zwei oder mehreren Komponenten oder Teilnehmern in einem Kommunikationsnetzwerk entweder zugelassen oder unterdrückt wird. Dies wird regelmäßig durch Firewall-Systeme bewerkstelligt. Derartige Lösungen sind z.B. aus den veröffentlichten Patentschriften bzw. Patentanmeldungen EP 1417820 B1, WO 2007038872 A1, US 2018115517 A1, WO 00/72171 A1, CA 2594020 C, US 6574666 B1, US 6154775 A bekannt. Die veröffentlichte Patentanmeldung WO 2005/072170 A2 beschreibt ein dynamisches Switchen von Kommunikation. In solchen Systemen werden Kommunikationsregeln definiert, die auf Netzwerkparametern oder Kommunikationsparametern oder bestimmten Diensten/Protokollen (z. B. http, ftp, webdav, ssh, o.ä.) der über Netzwerk angeschlossenen Netzwerkteilnehmer basieren. Netzwerkparameter oder Kommunikationsparameter dieser Art sind z. B. Zertifikate, MAC-Adressen, IP-Adressen, Netzwerk-Ports, Host-Client-Konfigurationen, o.ä. Der Austausch oder das Ersetzen von Netzwerkteilnehmern macht es entsprechend notwendig, dass derlei Kommunikationsregeln angepasst werden müssen. In komplexen technischen Systemen ist eine Anpassung von Kommunikationsregeln somit sehr aufwändig und fehleranfällig.

Eine Umkonfiguration von herkömmlichen Kommunikationsstrukturen bzw. Kommunikationsregeln ist aus diesen Gründen durch Laien in der Regel nicht möglich und erfordert Expertenwissen von hierfür fallspezifisch herangezogenen Administratoren oder IT-Fachkräften, die im Übrigen über die notwendige Erlaubnis/Freigabe zur Umkonfiguration verfügen müssen.

Die US 2017/295031 A1 offenbart Techniken oder Mechanismen zum automatischen Filtern von Netzwerknachrichten in einem Luftfahrtnetz für ein Flugzeug auf der Grundlage eines aktuellen Systemkontexts bereit. Es wird ein Verfahren bereitgestellt, das den Empfang einer Netzwerknachricht umfasst, die von einem Quellen-Avionikgerät an ein Ziel-Avionikgerät über ein oder mehrere Netzwerkpakete innerhalb des Luftfahrtnetzes übertragen wird. Ein aktueller Systemkontext, der einen Gesamtstatus von Avionikgeräten innerhalb des Luftfahrtnetzes angibt, wird auf der Grundlage der Überwachung der Avionikgeräte bestimmt. Die Netzwerknachricht wird analysiert, indem eine Vielzahl von Attributen identifiziert wird, die den Kopf- und Datenfeldern des einen oder der mehreren Netzwerkpakete entsprechen, die der Netzwerknachricht entsprechen. Die Annehmbarkeit der Netzwerknachricht innerhalb des aktuellen Systemkontexts wird auf der Grundlage einer oder mehrerer Filterregeln bestimmt, die angeben, welche Attribute innerhalb eines bestimmten Systemkontexts zulässig sind.

Es ist eine Aufgabe der vorliegenden Erfindung ein Verfahren sowie ein Kommunikationssteuersystem zur Steuerung bzw. Beeinflussung von Kommunikation in einem Kommunikationsnetzwerk zu beschreiben, die eine gegenüber herkömmlichen Ansätzen einfacher handzuhabende, situationsgerechtere, umfangreichere und flexiblere Steuerung oder Beeinflussung der Kommunikation von einer oder mehreren Komponenten in einem Kommunikationsnetzwerk ermöglichen.

Diese Aufgabe wird in einem ersten Aspekt durch ein Verfahren gemäß Patentanspruch 1 gelöst. Weitergehende Implementierungen sind nachfolgend und in den zugehörigen Unteransprüchen offenbart.

Das Verfahren ist zur situationsabhängigen Beeinflussung von Kommunikation wenigstens einer Komponente innerhalb eines Kommunikationsnetzwerkes eingerichtet. Das Kommunikationsnetzwerk weist eine, zwei oder mehr Komponenten auf. Das Kommunikationsnetzwerk ist beispielsweise als privates oder öffentliches Kommunikationsnetzwerk oder einer Mischung daraus eingerichtet. Eine Kommunikation der Komponente(n) innerhalb des Kommunikationsnetzwerkes wird über ein Kommunikationssteuersystem geleitet. Das Kommunikationssteuersystem unterscheidet mehrere, beispielsweise vorkonfigurierte, Kommunikationsszenarien und wählt situationsabhängig eines der Kommunikationsszenarien aus. Die Kommunikation der Komponente(n) wird in Abhängigkeit von dem jeweils ausgewählten Kommunikationsszenario gesteuert.

Insbesondere wird die Kommunikation der Komponente(n) in Abhängigkeit von dem jeweils ausgewählten Kommunikationsszenario derart beeinflusst, dass ein Kommunikationsinhalt situationsabhängig verändert oder komplett ersetzt wird. Der Kommunikationsinhalt bezeichnet beispielsweise eine Semantik oder eine semantische Bedeutung der Kommunikation, insbesondere einer Nachricht, eines Befehls, einer Anweisung oder Nutzdaten. Beispielsweise greift das Kommunikationssteuersystem in eine erzeugte (bereits bestehende) Kommunikation von außerhalb oder nach außerhalb der Komponente ein, d.h. in eine erzeugte Kommunikation/einen erzeugten Kommunikationsfluss von außen in die Komponente oder aus der Komponente nach außen. Der Kommunikationsinhalt der erzeugten (bereits bestehenden) Kommunikation wird dabei durch das Kommunikationssteuersystem in Abhängigkeit von dem jeweils ausgewählten Kommunikationsszenario zielgerichtet beeinflusst, d.h. verändert (Beschränken, Hinzufügen oder teilweises Ersetzen), unterdrückt oder komplett ersetzt. Alternativ oder ergänzend erzeugt/initiiert das Kommunikationssteuersystem eine (noch nicht vorhandene) Kommunikation und erschafft somit einen neuen Kommunikationsinhalt.

Die Kommunikationsszenarien umfassen beispielsweise unterschiedliche Vorgaben, Parameter oder Einstellungen bezüglich eines oder mehrerer Parameter aus Kommunikationsverbindung, Kommunikationsrichtung, Kommunikationsumfang oder Kommunikationsinhalt der Kommunikation der Komponente(n) und/oder einer Kommunikation zwischen einer oder mehreren der Komponenten und dem Kommunikationssteuersystem selbst. Ein Kommunikationsszenario macht z.B. Vorgaben für mindestens eine im Normalfall aber mehrere Kommunikationsverbindungen bzw. Kommunikationsthemen.

Das Kommunikationssteuersystem überwacht ein Eintreten einer (situationsabhängigen) Bedingung. Die (situationsabhängige) Bedingung unterscheidet sich beispielsweise, aber nicht notwendigerweise, von Netzwerkparametern der Komponente(n) und/oder Kommunikationsparametern der Komponente(n) und/oder einem Nutzdatenverkehr der Komponente(n) innerhalb des Kommunikationsnetzwerkes. Das Kommunikationssteuersystem nimmt einen Wechsel von einem ausgewählten Kommunikationsszenario auf ein anderes Kommunikationsszenario vor, wenn die situationsabhängige Bedingung eintritt.

Ein Verfahren der erläuterten Art hat gegenüber herkömmlichen Lösungen den Vorteil, dass eine Kommunikation von einer oder mehreren Komponenten innerhalb des Kommunikationsnetzwerkes situationsabhängig bzw. situationsgerecht gesteuert bzw. beeinflusst werden kann. Die Steuerung bzw. Beeinflussung erfolgt über das Kommunikationssteuersystem, das, gegebenenfalls entsprechend vorkonfigurierte, Kommunikationsszenarien heranzieht und zur Steuerung bzw. Beeinflussung der Kommunikation ein Kommunikationsszenario auswählt. Die Auswahl erfolgt in Abhängigkeit von einem Eintreten eines bestimmten Ereignisses (Auslöseereignisses) oder einer (situationsabhängigen) Bedingung. Auf diese Weise kann eine Kommunikation bzw. ein Kommunikationsinhalt innerhalb des Kommunikationsnetzwerkes einfach, schnell, adaptiv und flexibel in Abhängigkeit von einem Eintreten bestimmter Ereignisse (Auslöseereignisse) oder Bedingungen beeinflusst werden. Einer komplizierten und zeitaufwändigen Umkonfiguration des Kommunikationsnetzwerkes unter bestimmten Bedingungen oder Situationen durch Fachpersonal bedarf es dabei nicht. Gerade in bestimmten Situationen, wie z. B. sicherheitskritischen Situationen oder Notfallsituationen, ist ein erläutertes Verfahren somit gegenüber herkömmlichen Lösungen vorteilhaft.

In optionalen Implementierungen oder Weiterbildungen des Verfahrens unterscheidet sich die überwachte Bedingung bzw. das Auslöseereignis zur Auswahl eines bestimmten Kommunikationsszenarios, wie oben erläutert, von Netzwerkparametern der Komponente(n) und/oder Kommunikationsparametern der Komponente(n) und/oder einem Nutzdatenverkehr der Komponente(n) innerhalb des Kommunikationsnetzwerkes. Die überwachte Bedingung bzw. das Auslöseereignis kann sich in diesen optionalen Implementierungen auch von einer Änderung von Netzwerkparametern der Komponente(n) und/oder einer Änderung von Kommunikationsparametern der Komponente(n) und/oder einem Nutzdatenverkehr der Komponente(n) innerhalb des Kommunikationsnetzwerkes unterscheiden. Im Unterschied zu herkömmlichen Firewall-Systemen, bei denen eine Kommunikation in Abhängigkeit von einer Auswertung von Netzwerkparametern und/oder Kommunikationsparametern und/oder einem Nutzdatenverkehr der oben erläuterten Art gesteuert wird, erfolgt beim Verfahren gemäß diesen optionalen Implementierungen eine Steuerung/Beeinflussung der Kommunikation in Abhängigkeit von einem situationsabhängigen Eintreten eines darüber hinausgehenden Ereignisses oder einer darüber hinausgehenden Bedingung. Das Verfahren ermöglicht in diesen Implementierungen somit eine Steuerung/Beeinflussung der Kommunikation von Komponenten innerhalb des Kommunikationsnetzwerkes gegebenenfalls unabhängig von Netzwerkparametern und/oder Kommunikationsparameter und/oder einem Nutzdatenverkehr innerhalb des Kommunikationsnetzwerkes, sondern abhängig von einer jeweiligen Situation in der eine oder mehrere Komponenten bzw. das Kommunikationsnetzwerk selbst befindlich sind.

Unter Steuerung bzw. Beeinflussung der Kommunikation im Sinne der hier vorliegenden Beschreibung kann generell die Einflussnahme auf eine oder mehrere Komponenten bezüglich einer Kommunikation, auf die gesamte Kommunikation innerhalb des Kommunikationsnetzwerkes oder Teilbereiche der Kommunikation (z. B. einen bestimmten Kommunikationsstrang oder ein Kommunikationsthema) innerhalb des Kommunikationsnetzwerkes verstanden werden. Die Einflussnahme kann in einer Begrenzung oder Manipulation/Änderung vorhandener Kommunikation oder der Initiierung/Erschaffung/Durchführung nicht vorhandener Kommunikation bestehen. Die Einflussnahme kann sich auf den zeitlichen Umfang, den Kommunikationszeitpunkt (das Datum, den Wochentag, die Uhrzeit), die Datenmenge, die Übertragungsgeschwindigkeit, die Bandbreite, die Übertragungsrichtung, die möglichen Kommunikationspartner, den zulässigen Inhalt der Kommunikation, die Anzahl der Verbindungsaufnahmen (Verbindungsaufbau), eine Verschlüsselung der Kommunikation (der ausgetauschten Informationen), auf eine Manipulation (Veränderung oder kompletter Ersatz) des Kommunikationsinhaltes unter Heranziehung dieser Kriterien oder auf die Initiierung, Schaffung oder Durchführung von Kommunikation (ggf. unter diesen Kriterien) beziehen. Diese Punkte können einerseits auf eine Kommunikation wenigstens einer Komponente bzw. zwischen mehreren Komponenten innerhalb des Kommunikationsnetzwerkes und andererseits alternativ oder ergänzend auf eine Kommunikation zwischen einer oder mehreren Komponenten und dem Kommunikationssteuersystems selbst angewandt werden. Z. B. kann das Kommunikationssteuersystem selbst situationsabhängig Signale/Kommunikationsmuster an eine oder mehrere Komponenten im Kommunikationsnetzwerk aussenden. Die oben genannten Punkte können auch in den verschiedenen Vorgaben, Parametern oder Einstellungen der Kommunikationsszenarien Niederschlag finden.

Unter Kommunikation ist in der hier vorliegenden Beschreibung allgemein eine Signal- und/oder Datenkommunikation zu verstehen. Die Kommunikation erfolgt beispielsweise mit einer Komponente über eine Mensch-Maschine-Schnittstelle als Mensch-Maschine-Kommunikation und/oder zwischen mehreren Komponenten als Maschine-Maschine-Kommunikation.

Im Falle einer Implementierung als privates Kommunikationsnetzwerk ist unter dem Begriff "privates Kommunikationsnetzwerk" hier ein Kommunikationsnetzwerk mit nicht-öffentlicher oder nicht öffentlich ansprechbarer/adressierbarer Kommunikationsstruktur zu verstehen. Z. B. kann das private Kommunikationsnetzwerk als privates IP-Netzwerk mit einem privaten IP-Adressraum in Abgrenzung zu einem öffentlich zugänglichen IP-Netzwerk mit einem öffentlichen IP-Adressraum (wie das Internet oder öffentlich zugängliche Provider-Netzwerke) konfiguriert sein. Darunter kann auch ein Kommunikationsnetzwerk verstanden werden, das in sich privat, d.h. nicht öffentlich, eingerichtet ist, jedoch über ein öffentliches Kommunikationsnetz vermittelt wird, wie es zum Beispiel bei VPN- Netzwerken der Fall ist (VPN = virtual private Network).

Im Falle einer Implementierung als öffentliches Kommunikationsnetzwerk ist unter dem Begriff "öffentliches Kommunikationsnetzwerk" hier ein öffentlich zugängliches IP-Netzwerk mit einem öffentlichen IP-Adressraum (wie das Internet oder öffentlich zugängliche Provider-Netzwerke) zu verstehen.

Unter einer Komponente wird in der hier vorliegenden Beschreibung unter anderem ein elektrisches Gerät allgemein, ein Sensor, ein Steuerungssystem, ein Programmiergerät, ein Betriebsgerät, ein Netzwerkvermittlungssystem (z. B. Router, Switch, Hub), ein Aktuator, eine Maschine, eine Mensch-Maschine-Schnittstelle, ein Sicherheits-/Überwachungssystem, ein Computersystem, eine Gerätefunktion, eine Gerätenutzfunktion, eine Software oder eine Applikation auf einem Computersystem verstanden. Im Falle mehrerer Komponenten können sämtliche Komponenten über das Kommunikationsnetzwerk zu einem System, z. B. zu einem cyber-physischen System, verbunden sein. Das System ist z. B. eine computerisierte/digitalisierte Maschine oder Produktionsanlage oder ein computerisiertes/digitalisiertes Gebäude, computerisiertes Labor, Fahrzeug oder Transportsystem.

In diversen Implementierungen oder Weiterbildungen des Verfahrens ist das Kommunikationssteuersystem zentral im Kommunikationsnetzwerk eingerichtet. Der Begriff des zentral im Kommunikationsnetzwerk eingerichteten Kommunikationssteuersystems ist in der hier vorliegenden Beschreibung derart zu verstehen, dass Kommunikation einer Komponente oder zwischen zwei oder mehreren Komponenten innerhalb des Kommunikationsnetzwerkes über das Kommunikationssteuersystem geleitet wird, das bezüglich dieser Kommunikationswege zwischengeschaltet ist bzw. zwischen den Komponenten eingerichtet ist. Im Unterschied zu dezentral eingerichteten Kommunikationssteuerungen, bei denen dezentral jeweils für die einzelnen Komponenten ein die jeweilige Komponente steuernder Kommunikationsagent (zum Beispiel eine spezielle Software, Hardware, o.ä.) konfiguriert ist, ist bei dem Verfahren gemäß diesen Implementierungen ein zentrales Kommunikationssteuersystem eingerichtet. Dieses kann quasi als "Zentrum einer Sternverschaltung" der Komponenten innerhalb des Kommunikationsnetzwerkes konfiguriert sein. Dies schließt allerdings nicht aus, dass das Kommunikationssteuersystem mehrere einzelne (Unter-) Kommunikationssteuersysteme umfasst. Diese können z. B. zur Skalierung der Funktionalität innerhalb von Teilbereichen, Teilabschnitten oder Teilnetzwerken eines gesamten Kommunikationsnetzwerkes eingerichtet sein. Das Kommunikationssteuersystem kann in Form von Hardware und/oder Software, zum Beispiel als so genanntes eingebettetes System, konfiguriert sein.

In zu einer rein zentralen Implementierung alternativen oder ergänzenden Implementierungen ist das Kommunikationssteuersystem zumindest teilweise innerhalb einer jeweiligen Komponente implementiert, deren Kommunikation beeinflusst werden soll. Die Kommunikation von oder nach außerhalb der Komponente, d.h. eine Kommunikation/ein Kommunikationsfluss von außen in die Komponente oder aus der Komponente nach außen, wird über das zumindest teilweise in der Komponente eingerichtete Kommunikationssteuersystem geleitet. Das Kommunikationssteuersystem ist dem Kommunikationsfluss von oder nach außerhalb der Komponente und einem Komponenten-internen Kommunikationsfluss zwischengeschaltet. Das Kommunikationssteuersystem ist beispielsweise in Form von Hardware und/oder Software, zum Beispiel als so genanntes eingebettetes System, innerhalb der Komponente konfiguriert.

In diversen Implementierungen oder Weiterbildungen des Verfahrens arbeitet das Kommunikationssteuersystem innerhalb der Komponente rein dezentral in Bezug auf das Kommunikationsnetzwerk, an das die Komponente anbindbar ist. Das bedeutet, dass das Kommunikationssteuersystem separat zu einem etwaigen zentral im Kommunikationsnetzwerk eingerichteten Kommunikationssteuersystem konfiguriert ist. Im Unterschied zu einem zentral im Kommunikationsnetzwerk eingerichteten Kommunikationssteuersystem, das eine Steuerung sämtlicher Kommunikation innerhalb des Kommunikationsnetzwerkes beeinflusst, ist das dezentrale Kommunikationssteuersystem innerhalb der Komponente beispielsweise derart implementiert, dass es lediglich oder ausschließlich die für diese Komponente bestimmte bzw. von dieser Komponente erzeugte Kommunikation beeinflusst.

Ein Kommunikationsnetzwerk mit mehreren Komponenten mit darin implementierten Kommunikationssteuersystemen der erläuterten Art ist beispielsweise derart aufgebaut, dass die jeweiligen Kommunikationssteuersysteme der Komponenten dezentral eingerichtet sind. Jedes Kommunikationssteuersystem beeinflusst die für ihre Komponente bestimmte bzw. von ihrer Komponente erzeugte Kommunikation. Ein jedes Kommunikationssteuersystem arbeitet demnach als dezentraler, die Kommunikation der zugeordneten Komponente steuernder Kommunikationsagent. Optional ist ergänzend innerhalb eines solchen Kommunikationsnetzwerkes ein zentral im Kommunikationsnetzwerk eingerichtetes Kommunikationssteuersystem der obigen Art oder ein Teil davon vorgesehen, das/der zwischen den jeweiligen Komponenten bzw. deren Kommunikationssteuersystemen vermittelt bzw. analog zu Kommunikationssteuersystemen in den Komponenten die Kommunikation einer oder mehrerer Komponenten oder zwischen Komponenten im Kommunikationsnetzwerk beeinflusst.

In diversen optionalen Implementierungen oder Weiterbildungen des Verfahrens unterscheidet sich das Kommunikationssteuersystem von einem (Betriebs-) Zustandssteuersystem darin, dass ein (Betriebs-) Zustandssteuersystem unmittelbar Betriebszustände oder Betriebsmodi der beteiligten Komponenten steuert, was im Ergebnis Einfluss auf deren Kommunikation haben kann. Das Kommunikationssteuersystem beeinflusst dagegen in einer umgekehrten Kausalkette unmittelbar die Kommunikation der beteiligten Komponenten, was im Ergebnis Einfluss auf deren Betriebszustände oder Betriebsmodi haben kann. In diesen optionalen Implementierungen steuert das Kommunikationssteuersystem selbst daher primär keine Betriebszustände oder Betriebsmodi der beteiligten Komponenten innerhalb des Kommunikationsnetzwerkes anhand von Steuer- und/oder Regelungsparametern oder entsprechenden Betriebssteuersignalen, wie es ein oder mehrere (Betriebs-) Zustandssteuersysteme tun. Das Kommunikationssteuersystem an sich veranlasst in diesem Fall auch keine (Betriebs-) Zustandswechsel oder Betriebsmoduswechsel von Komponenten, die womöglich ebenfalls eine Änderung einer Kommunikation auslösen (z. B. Abschalten/Deaktivieren/Standby von Komponenten oder von Funktionen von Komponenten). Vielmehr steuert/beeinflusst das Kommunikationssteuersystem in diesen Implementierungen innerhalb bestimmter (Betriebs-) Zustände oder Betriebsmodi der Komponenten oder ausgelöst durch eine Zustandsänderung oder Betriebsmodusänderung der Komponenten, die durch diese Zustände/Zustands-/Modusänderungen vorgegebene/eingerichtete Kommunikation als solche derart, dass eine situationsabhängig erschaffene, geänderte, erforderliche/notwendige/erlaubte Kommunikation erzielt wird. Dies hat den Vorteil, dass eine aufwendige und fehleranfällige Programmierung, Anpassung oder Umkonfigurierung einer (Betriebs-) Zustandssteuerung der Komponenten für eine situationsabhängig gewünschte/erforderliche Kommunikation nicht notwendig ist. Vielmehr kann eine Kommunikationssteuerung in diesen optionalen Implementierungen anhand der Kommunikationsszenarios flexibel, abstrahiert und losgelöst von einer Programmierung/Vorgabe einer (Betriebs-) Zustandssteuerung der Komponenten erfolgen. Durch die Kommunikationssteuerung kann somit eine durch einen bestimmten (Betriebs-) Zustand einer Komponente, des Kommunikationsnetzwerkes oder Systems generell mögliche/zugelassene Kommunikation in eine situationsabhängig veranlasste Kommunikation modifiziert werden, die sich von der (betriebs-) zustandsbasiert möglichen/zugelassenen Kommunikation unterscheidet. Auf diese Weise kann insbesondere die Sicherheit sämtlicher an der Kommunikation im Kommunikationsnetzwerk beteiligten Komponenten aufrechterhalten und gewährleistet werden. Allerdings kann eine durch das Kommunikationssteuersystem beeinflusste/geänderte Kommunikation kausal im Ergebnis zu einem Zustandswechsel einer oder mehrerer Komponenten führen.

Unter dem Begriff "situationsabhängig" ist in der hier vorliegenden Beschreibung zu verstehen, dass eine Berücksichtigung einer Situation erfolgt. Die Situation kann ein Zustand oder eine Zustandsänderung innerhalb, der Komponente(n), innerhalb des Kommunikationsnetzwerkes oder innerhalb eines Systems oder einer Anlage sein, in dem oder der das Kommunikationsnetzwerk implementiert ist. Ein Zustand kann z. B. ein Betriebszustand (z.B. laufend, aktiviert, angehalten, deaktiviert, Stromsparmodus, Schlafzustand, Tag- /Nachtbetrieb), ein Wartungsmodus oder ein Notfall/Problemzustand sein. Die Situation kann alternativ oder ergänzend auch eine Umgebungsbedingung oder eine Änderung einer Umgebungsbedingung außerhalb des Kommunikationsnetzwerkes oder außerhalb eines Systems oder einer Anlage sein, in dem oder der das Kommunikationsnetzwerk implementiert ist. Unter Umgebungsbedingung ist eine Bedingung zu verstehen, die wenig oder gar nicht von der oder den Komponente(n), vom Kommunikationsnetzwerk oder vom System oder der Anlage selbst abhängig ist und nicht oder nicht direkt durch die Komponente(n), das Kommunikationsnetzwerk, System oder die Anlage beeinflusst wird oder werden kann. Umgebungsbedingungen können physische oder Umwelt-Bedingungen (z. B. Temperatur, Druck, Feuchte) oder ganze Wetterlagen (z. B. Unwetter, Stürme, Überschwemmungen), gesellschaftliche Bedingungen (z. B. Terrorgefahr, Risikolage, Schutzbedarf) oder technische Bedingungen (z. B. erkannte Schwachstellen, geänderte IT-Angriffsszenarien) sein. Die Situation kann auch eine Kombination der obigen Kriterien sein.

In diversen Implementierungen oder Weiterbildungen des Verfahrens umfasst das Eintreten der situationsabhängigen Bedingung eines oder mehrere der folgenden Ereignisse:
- ein Eintreten einer externen Bedingung (Umgebungsbedingung) oder einer Änderung einer externen Bedingung (Umgebungsbedingung) außerhalb des Kommunikationsnetzwerkes, der Anlage oder des Systems,
- eine Zustandsänderung einer oder mehrerer Komponenten innerhalb des Kommunikationsnetzwerkes, des Kommunikationsnetzwerkes selbst, der Anlage oder des Systems,
- eine Überschreitung einer vorgegebenen Tageszeit,
- eine Überschreitung einer vorgegebenen Zeitdauer des Vorliegens eines ausgewählten Kommunikationsszenarios,
- eine Überschreitung eines vorgegebenen Zeitpunkts (z.B. Datum, Wochentag, Monat, Jahr),
- eine Überschreitung einer bestimmten Datenmenge der Kommunikation der Komponente(n) oder zwischen den Komponenten oder eine Überschreitung eines bestimmten durch eine oder mehrere Komponenten beanspruchten Datenvolumens innerhalb des Kommunikationsnetzwerkes, der Anlage oder des Systems,
- ein Erkennen eines definierten Kommunikationsmusters in der Kommunikation der Komponente(n) oder zwischen den Komponenten innerhalb des Kommunikationsnetzwerkes, der Anlage oder des Systems,
- eine Betätigung einer Schalteinrichtung (z. B. Notfallschalteinrichtung, Notfallschalter, Not-Aus-Schalter, usw.), die sich von einem Aktivieren oder Deaktivieren des Kommunikationssteuersystems (oder alternativ von einem Aktivieren oder Deaktivieren einer oder mehrerer Komponenten, des Systems oder der Anlage) unterscheidet,
- ein Signal eines anderen Kommunikationssteuersystems, z.B. ein Eintreten eines Kommunikationsszenarios in dem anderen Kommunikationssteuersystem.

In diversen Implementierungen oder Weiterbildungen des Verfahrens ist wenigstens eine Komponente als Gerät eingerichtet, wobei die Kommunikationssteuerung die Kommunikation zwischen einer Gerätenutzfunktion innerhalb des Gerätes und einem Kommunikationsnetzwerk außerhalb des Gerätes in Abhängigkeit von dem jeweils ausgewählten Kommunikationsszenario beeinflusst. Dies hat den technischen Effekt, dass ein Inhalt der Kommunikation der Gerätenutzfunktion innerhalb des Gerätes je nach Kommunikationsszenario von einem Inhalt der Kommunikation außerhalb des Gerätes abweichen kann. Dies hat den Vorteil, dass ein Kommunikationsinhalt von oder nach außerhalb des Gerätes bedarfs- und situationsgerecht flexibel an eine vorliegende Situation anpassbar ist, ohne die Gerätenutzfunktion an sich situationsabhängig verändern zu müssen.

Gemäß des hier beschriebenen Verfahrens wird der Kommunikationsinhalt in verschiedene Kommunikationsthemen gegliedert. Jedes Kommunikationsthema wird für sich in Abhängigkeit von dem jeweils ausgewählten Kommunikationsszenario beeinflusst. Dies hat den Vorteil, dass die Beeinflussung der Kommunikation von oder nach außerhalb der Komponente selektiv für einzelne Kommunikationsthemen gesteuert werden kann, gemäß dem hier beschriebenen Verfahren für eine Kommunikation einer bestimmten Software-Anwendung in der Komponente, ohne andere Kommunikationsinhalte abhängig davon zu beeinflussen. Dies erlaubt eine sehr feingliedrige Beeinflussung der Kommunikation. Alternativ oder ergänzend wird gemäß dem hier beschriebenen Verfahren die Erstellung von Kommunikations-Regeln bzw. der Kommunikationsszenarios zur Beeinflussung der Kommunikation durch die Verwendung von Kommunikationsthemen in einer geräteunabhängigen Art und Weise (abstrakt) und entsprechend vereinfacht durchgeführt, d.h. unter Verwendung von Kommunikationsthemen in einer abstrakten Grammatik/Hochsprache, die sich von einer geräteabhängigen konkreteren Grammatik/niedere Sprache unterscheidet.

In diversen Implementierungen oder Weiterbildungen des Verfahrens nimmt das Kommunikationssteuersystem eine Erschaffung oder Begrenzung der Kommunikation der Komponente(n) auf einen eingeschränkten Kommunikationsumfang bzw. Kommunikationsinhalt und/oder eine Modifikation der Kommunikation bzw. des Kommunikationsinhalts vor und/oder sendet an eine oder mehrere Komponenten ein oder mehrere im Kommunikationssteuersystem erzeugte Kommunikationssignale aus, wenn die situationsabhängige Bedingung eintritt. Derlei Maßnahmen können insbesondere in sicherheitskritischen Situationen sinnvoll sein, um die Sicherheit der Komponente(n), des Kommunikationsnetzwerkes, des Systems oder der Anlage, bzw. deren sicheren Betrieb aufrechtzuerhalten und zu gewährleisten.

In diversen Implementierungen oder Weiterbildungen des Verfahrens wird eine Selbstdiagnose des Kommunikationssteuersystems durchgeführt, wobei ein Wechsel von einem ausgewählten Kommunikationsszenario auf ein speziell vorgegebenes Sicherheits-Kommunikationsszenario vorgenommen wird, wenn die Selbstdiagnose des Kommunikationssteuersystems einen Fehlerfall oder einen Risikofall des Kommunikationssteuersystems ergibt. Derlei Maßnahmen sichern einen so genannten Fail-Safe-Fall ab, wenn mittels der Selbstdiagnose eine Situation erkannt oder identifiziert wird, die auf einen Fehlerfall oder einen Risikofall des Kommunikationssteuersystems schließen lässt. In einem solchen Fall wird ein spezielles Sicherheits-Kommunikationsszenario angesteuert, dass für einen speziellen Kommunikationsmodus in diesem Fall eingerichtet ist. Zum Beispiel wird die Kommunikation innerhalb des Kommunikationsnetzwerkes in einem solchen Fall auf den reinen Austausch von Sicherheits-(Steuer- )Signalen zwischen beteiligten Komponenten eingeschränkt. Alternativ wird die Kommunikation einer Komponente oder zwischen zwei oder mehreren Komponenten innerhalb des Kommunikationsnetzwerkes generell unterbunden oder wird das Kommunikationssteuersystem deaktiviert. Alternativ oder ergänzend sind weitere Möglichkeiten einer Einflussnahme auf die Kommunikation gemäß der oben erläuterten Art vorgesehen. Z.B. wird eine Kommunikation von Sicherheits- oder Notsignalen initiiert. Die Selbstdiagnose wird zum Beispiel durch ein Selbstdiagnose-System innerhalb des Kommunikationsnetzwerkes durchgeführt.

In optionalen Implementierungen oder Weiterbildungen des Verfahrens überwacht ein Überwachungssystem einen Datenverkehr und/oder einen (Kommunikations-) Zustand der jeweiligen Komponenten innerhalb des Kommunikationsnetzwerkes und erzeugt Überwachungssignale. Die Überwachungssignale werden an das Kommunikationssteuersystem übergeben, wobei das Kommunikationssteuersystem das Eintreten der situationsabhängigen Bedingung anhand der Überwachungssignale überwacht. Das Überwachungssystem ist eine Sicherheits-Instanz, die den Zustand der Komponenten bzw. des gesamten Kommunikationsnetzwerkes und/oder deren Datenverkehr überwacht. Abweichungen von einem Soll-Zustand oder sonstige Überwachungssignale werden an das Kommunikationssteuersystem übermittelt. Das Kommunikationssteuersystem kann die Überwachungssignale heranziehen zum Überwachen des Eintretens der situationsabhängigen Bedingung. Die situationsabhängige Bedingung kann in diesem Fall ein spezieller Datenverkehr (z. B. ein spezielles Kommunikationsmuster) und/oder (Kommunikations-) Zustand einer oder mehrerer Komponenten bzw. des gesamten Kommunikationsnetzwerkes sein, der über die Überwachungssignale detektiert wird.

In diversen Implementierungen oder Weiterbildungen des Verfahrens ist das Kommunikationsnetzwerk innerhalb eines cyber-physischen Systems implementiert. Ein Automatisierungssystem erzeugt Prozesssignale des cyber-physischen Systems. Die Prozesssignale umfassen Gefährdungsparameter und/oder Zustandsparameter des cyber-physischen Systems. Die Prozesssignale werden an das Kommunikationssteuersystem übergeben, wobei das Kommunikationssteuersystem das Eintreten der situationsabhängigen Bedingung anhand der Prozesssignale überwacht. Das cyber-physische System kann gemäß den obigen Erläuterungen eingerichtet sein. Das Automatisierungssystem ist gegebenenfalls separat zum oben erläuterten Überwachungssystem eingerichtet. In alternativen Implementierungen ist das Automatisierungssystem Teil des Überwachungssystems oder gemeinsam mit dem Überwachungssystem in einem Sicherheitssystem implementiert. Das Automatisierungssystem kontrolliert im Unterschied zum Überwachungssystem Prozesse des cyber-physischen Systems, die über eine reine Überwachung des Kommunikationsnetzwerkes oder dessen Komponenten hinausgehen. Zum Beispiel ist das Automatisierungssystem ein Steuer- und/oder Regelungssystem des cyber-physischen Systems. Das Automatisierungssystem bildet aus Prozessen des cyber-physischen Systems Prozesssignale, die auf die Steuerung der Kommunikation mittels der Kommunikationsszenarien durch das Kommunikationssteuersystem Einfluss nehmen. Die vom Automatisierungssystem erzeugten Prozesssignale des cyber-physischen Systems werden dem Kommunikationssteuersystem übergeben zum Überwachen des Eintretens der situationsabhängigen Bedingung. Dies sind z. B. Gefährdungsparameter (z. B. Druck hoch, Temperatur hoch) und/oder Zustandsparameter (System läuft, System steht still). Die situationsabhängige Bedingung kann in diesem Fall ein Zustand des cyber-physischen Systems oder einer seiner Komponenten (innerhalb oder außerhalb des Kommunikationsnetzwerkes) oder die oben genannten Gefährdungsparameter sein. Das Automatisierungssystem ist eine Instanz, die den Zustand und/oder Ablauf von Prozessen des cyber-physischen Systems überwacht und/oder steuert.

In diversen Implementierungen oder Weiterbildungen des Verfahrens führt ein, z.B. betriebliches, Risikobewertungssystem eine betriebliche und/oder überbetriebliche Risikobewertung des cyber-physischen Systems durch und ermittelt eine Gefährdungsstufe. Die ermittelte Gefährdungsstufe wird an das Kommunikationssteuersystem übergeben, wobei das Kommunikationssteuersystem das Eintreten der situationsabhängigen Bedingung anhand der ermittelten Gefährdungsstufe überwacht. Das Risikobewertungssystem ist eine Sicherheits-Instanz, die u.a. Produkt- oder Komponenten-Schwachstellen des Komponenten-Inventars oder auch einen Gesamt-Prozess-Zustand des Systems überwacht und daraus eine Gefährdungsstufe ableitet, welche im Kommunikationssteuersystem verarbeitet wird.

In optionalen Implementierungen oder Weiterbildungen des Verfahrens führt ein überbetriebliches Risikobewertungssystem eine überbetriebliche Risikobewertung der Umgebung des cyber-physischen Systems durch und ermittelt eine überbetriebliche Gefährdungsstufe. Die ermittelte überbetriebliche Gefährdungsstufe wird an das Kommunikationssteuersystem übergeben, wobei das Kommunikationssteuersystem das Eintreten der situationsabhängigen Bedingung anhand der ermittelten überbetrieblichen Gefährdungsstufe überwacht. Das überbetriebliche Risikobewertungssystem ist zum Beispiel konfiguriert, ein Werksgelände, auf dem das cyber-physische System installiert ist, zu überwachen. Hierzu ist das überbetriebliche Risikobewertungssystem zum Beispiel an eine Sensorik zur Überwachung angebunden. Die Sensorik umfasst zum Beispiel bildgebende Sensoren (Kameras), Wärmesensoren, Strahlungssensoren, chemische Sensoren, Rauchmelder, Mikrofone, usw.. Das überbetriebliche Risikobewertungssystem kann auch an online-Dienste, zum Beispiel Wetterdienste, Regenradar, CERT-Dienste, usw. angebunden sein zur Überwachung und Einschätzung von Umweltbedingungen. Das überbetriebliche Risikobewertungssystem unterhält z. B. eine Ereignissteuerung (Notfall-Steuerung). Die Ereignissteuerung stellt Informationen über die überbetriebliche Gefährdungsstufe bereit und kann z. B. einen Not-Aus-Befehl erzeugen. Dieser Not-Aus-Befehl kann vom Kommunikationssteuersystem als Eintreten der situationsabhängigen Bedingung identifiziert werden.

In diversen Implementierungen oder Weiterbildungen des Verfahrens ist eine Konfiguration, d.h. Parametrierung, Programmierung, Einstellung, und/oder ein Betrieb/eine Verwendung der Kommunikationsszenarien unabhängig und/oder getrennt
- vom technischen Aufbau der Komponente und/oder
- von der Art der Kommunikation und/oder
- von einer Konfiguration von Netzwerkparametern der Komponente(n) und/oder Kommunikationsparametern der Komponente(n).

Eine Trennung der Kommunikationsszenarien und deren Konfiguration vom technischen Aufbau, der Art der Kommunikation und/oder von den technischen Netzwerkparametern der Komponente(n) oder Kommunikationsparametern der Komponente(n) macht es möglich die technische Infrastruktur der Komponente(n) (Geräte, MAC-Adressen, IP-Adressen, Netzwerk-Ports, Register, Protokolle, Zertifikate, Verschlüsselungen, usw.) zu ändern, ohne dass die Kommunikationsszenarien selbst verändert oder angepasst werden müssen. Umgekehrt kann unter Umständen eine Änderung oder Anpassung der Kommunikationsszenarien erfolgen, ohne dass der technische Aufbau, die Art der Kommunikation und/oder konkrete Netzwerkparameter oder Kommunikationsparameter der Komponente(n) umkonfiguriert werden müssen oder bekannt sein müssen. Dies erlaubt eine flexible, anpassbare und skalierbare Konfiguration.

Die Konfiguration und/oder der Betrieb/die Verwendung der Kommunikationsszenarien erfolgt z. B. auf anderer Benutzerebene/durch andere Benutzer und ggf. mit anderen Tools, Geräten oder Werkzeugen als die Konfiguration/Verwaltung von Netzwerkparametern der Komponenten und/oder Kommunikationsparametern der Komponenten. Zum Beispiel kann die Konfiguration der Kommunikationsszenarien auf einer so genannten Governance-Ebene durchgeführt werden, während die Konfiguration von Netzwerkparametern und/oder Kommunikationsparameter auf einer so genannten IT-Planungs-Ebene durchgeführt wird.

Die obige Aufgabe wird in einem zweiten Aspekt durch ein Kommunikationssteuersystem gemäß Patentanspruch 6 gelöst. Detaillierte bzw. weiterbildende Ausführungsformen sind in den zugehörigen Unteransprüchen offenbart.

Das Kommunikationssteuersystem ist zur situationsabhängigen Steuerung bzw. Beeinflussung von Kommunikation wenigstens einer Komponente innerhalb eines Kommunikationsnetzwerkes eingerichtet. Das Kommunikationssteuersystem unterscheidet mehrere, beispielsweise vorkonfigurierte,

Kommunikationsszenarien, die situationsabhängig auswählbar sind bzw. ausgewählt werden. Beispielsweise ist das Kommunikationssteuersystem konfiguriert automatisch eine Auswahl eines Kommunikationsszenarios situationsabhängig vorzunehmen. Das Kommunikationssteuersystem ist eingerichtet die Kommunikation der Komponente(n) in Abhängigkeit von dem jeweils ausgewählten Kommunikationsszenario zu steuern. Insbesondere ist das Kommunikationssteuersystem eingerichtet die Kommunikation der Komponente(n) in Abhängigkeit von dem jeweils ausgewählten Kommunikationsszenario derart zu beeinflussen, dass ein Kommunikationsinhalt situationsabhängig verändert oder komplett ersetzt wird. Der Kommunikationsinhalt bezeichnet beispielsweise eine Semantik oder eine semantische Bedeutung der Kommunikation, insbesondere einer Nachricht, eines Befehls, einer Anweisung oder von Nutzdaten. Beispielsweise ist das Kommunikationssteuersystem konfiguriert in eine erzeugte (bereits bestehende) Kommunikation von außerhalb oder nach außerhalb der Komponente einzugreifen, d.h. in eine erzeugte Kommunikation/einen erzeugten Kommunikationsfluss von außen in die Komponente oder aus der Komponente nach außen. Das Kommunikationssteuersystem ist z.B. konfiguriert den Kommunikationsinhalt der erzeugten (bereits bestehenden) Kommunikation in Abhängigkeit von dem jeweils ausgewählten Kommunikationsszenario zu verändern (Beschränken, Hinzufügen oder teilweises Ersetzen), zu unterdrücken oder komplett zu ersetzen. Alternativ oder ergänzend ist das Kommunikationssteuersystem z.B. konfiguriert eine (noch nicht vorhandene) Kommunikation zu erzeugen/zu initiieren und somit einen neuen Kommunikationsinhalt zu erschaffen.

Die Kommunikationsszenarien umfassen beispielsweise unterschiedliche Vorgaben bezüglich eines oder mehrerer Parameter aus Kommunikationsverbindung, Kommunikationsrichtung, Kommunikationsumfang oder Kommunikationsinhalt der Kommunikation der Komponente(n) und/oder einer Kommunikation zwischen einer oder mehreren der Komponenten und dem Kommunikationssteuersystem selbst.

Das Kommunikationssteuersystem ist eingerichtet ein Eintreten einer situationsabhängigen Bedingung zu überwachen. Die situationsabhängige Bedingung unterscheidet sich beispielsweise, aber nicht notwendigerweise, von Netzwerkparametern der Komponente(n) und/oder Kommunikationsparametern der Komponente(n) und/oder einem Nutzdatenverkehr der Komponente(n) innerhalb des Kommunikationsnetzwerkes. Das Kommunikationssteuersystem ist eingerichtet einen Wechsel von einem ausgewählten Kommunikationsszenario auf ein anderes Kommunikationsszenario vorzunehmen, wenn die situationsabhängige Bedingung eintritt.

Ein derartiges Kommunikationssteuersystem erzielt dieselben Vorteile und Effekte, wie sie oben im Zusammenhang mit einem Kommunikationssteuersystem des Verfahrens gemäß dem ersten Aspekt erläutert worden sind. Sämtliche im Zusammenhang mit dem obigen Verfahren dargestellten Implementierungen bzw. Weiterbildungen können auch hier Anwendung finden.

In diversen Ausführungsformen oder Weiterbildungen weist das Kommunikationssteuersystem eine Steuerungslogik und ein Kommunikationsvollzugsmodul auf. Die Steuerungslogik ist eingerichtet ein auszuwählendes Kommunikationsszenario in Abhängigkeit von der vorliegenden situationsabhängigen Bedingung (gemäß einer vorkonfigurierten Kommunikationslogik) zu ermitteln. Das Kommunikationsvollzugsmodul ist eingerichtet das in der Steuerungslogik ermittelte Kommunikationsszenario umzusetzen. Das Kommunikationssteuersystem ist **z. B.** ein eingebettetes System mit einem Mikroprozessor, der die Steuerungslogik aufweist und mit einem sogenannten FPGA (Field Programmable Gate Array), das als Kommunikationsvollzugsmodul eingerichtet ist.

In diversen Ausführungsformen oder Weiterbildungen sind mehrere Kommunikationssteuersysteme eingerichtet das Kommunikationsszenario von einer oder mehreren übergeordneten zentralen Steuerungslogik(en) abzuleiten.

Gemäß dieser Anmeldung ist das Kommunikationssteuersystem eingerichtet den Kommunikationsinhalt in verschiedene Kommunikationsthemen zu gliedern und jedes Kommunikationsthema für sich in Abhängigkeit von dem jeweils ausgewählten Kommunikationsszenario zu beeinflussen. Hierbei werden dieselben Vorteile und Effekte erzielt, wie sie in diesem Zusammenhang oben zum Verfahren gemäß dem ersten Aspekt erläutert worden sind.

In diversen Anwendungsfällen ist ein Kommunikationsnetzwerk mit einer, zwei oder mehr Komponenten, die für eine Kommunikation innerhalb des Kommunikationsnetzwerkes eingerichtet sind, sowie mit einem Kommunikationssteuersystem der erläuterten Art implementiert. Das Kommunikationsnetzwerk ist beispielsweise als privates oder öffentliches Kommunikationsnetzwerk oder einer Mischung daraus eingerichtet. Das Kommunikationsnetzwerk erzielt dieselben Vorteile und Effekte, wie sie oben im Zusammenhang mit einem Kommunikationsnetzwerk des Verfahrens gemäß dem ersten Aspekt erläutert worden sind. Sämtliche im Zusammenhang mit dem obigen Verfahren dargestellten Implementierungen oder Weiterbildungen können auch hier Anwendung finden.

In diversen Anwendungsfällen ist ein cyber-physisches System mit einem Kommunikationsnetzwerk der erläuterten Art und mit einem Automatisierungssystem eingerichtet. Das cyber-physische System erzielt dieselben Vorteile und Effekte, wie sie oben im Zusammenhang mit einem cyber-physischen System des Verfahrens gemäß dem ersten Aspekt erläutert worden sind. Sämtliche im Zusammenhang mit dem obigen Verfahren dargestellten Implementierungen oder Weiterbildungen können auch hier Anwendung finden.

In diversen Anwendungsfällen ist ein Leitsystem mit einem cyber-physischen System der erläuterten Art und mit einem (überbetrieblichen) Risikobewertungssystem eingerichtet. Das Leitsystem erlaubt eine (überbetriebliche) Risikobewertung und erzielt dieselben Vorteile und Effekte, wie sie oben im Zusammenhang mit einer (überbetrieblichen) Risikobewertung des Verfahrens gemäß dem ersten Aspekt erläutert worden sind. Sämtliche im Zusammenhang mit dem obigen Verfahren dargestellten Implementierungen oder Weiterbildungen können auch hier Anwendung finden.

Sämtliche im Zusammenhang mit dem obigen Verfahren gemäß dem ersten Aspekt erläuterten Implementierungen, Merkmale, Vorteile und Effekte können in strukturellen Ausführungen, Merkmalen, Vorteilen und Effekten, die im Zusammenhang mit dem Kommunikationssteuersystem, dem Kommunikationsnetzwerk, dem cyber-physischen System oder dem Leitsystem gemäß dem zweiten Aspekt erläutert worden sind Niederschlag finden und umgekehrt.

Die Erfindung wird nachfolgend anhand von mehreren beispielhaften Ausführungsformen und Implementierungen unter Zuhilfenahme mehrerer Zeichnungen näher erläutert.

Es zeigen:
- Figur 1: eine schematisierte Darstellung einer beispielhaften Ausführungsform eines Kommunikationsnetzwerkes,
- Figuren 2A...2C: schematisierte Darstellungen von Beeinflussungen einer Kommunikation innerhalb des Kommunikationsnetzwerkes gemäß Figur 1,
- Figur 3: eine schematisierte Darstellung einer beispielhaften Ausführungsform eines Gerätes, das an ein Kommunikationsnetzwerk angebunden ist,
- Figuren 4A...4H: schematisierte Darstellungen verschiedener beispielhafter Zustände einer Beeinflussung der Kommunikation von und nach außerhalb des Gerätes gemäß Figur 3 bzw. innerhalb eines Kommunikationsnetzwerkes gemäß Figur 1,
- Figur 5 und 6: Kombinationen der Beeinflussung verschiedener Kommunikationsthemen von und nach außerhalb des Gerätes gemäß Figur 3 bzw. innerhalb eines Kommunikationsnetzwerkes gemäß Figur 1
- Figur 7: eine schematisierte Darstellung einer beispielhaften Ausführungsform eines Systems mit mehreren Geräten gemäß Figur 3,
- Figur 8: eine schematisierte Darstellung einer beispielhaften Konfiguration von Komponenten eines Kommunikationsnetzwerkes,
- Figur 9: ein schematisiertes Übersichtsdiagramm von beispielhaften Kommunikationsszenarien der Konfiguration gemäß Figur 8,
- Figur 10: ein schematisiertes Steuerdiagramm zur Steuerung von beispielhaften Kommunikationsszenarien gemäß Figur 9,
- Figur 11A: eine schematisierte Darstellung einer beispielhaften Konfiguration von Instanzen eines Gesamtsystems mit zentral integriertem Kommunikationssteuersystem,
- Figur 11B: eine schematisierte Darstellung einer beispielhaften Konfiguration von Instanzen eines Gerätes mit integriertem Kommunikationssteuersystem in einem Gesamtsystem,
- Figur 12A: eine schematisierte Darstellung einer beispielhaften Konfiguration von Schnittstellen der Konfiguration gemäß Figur 11A,
- Figur 12B: eine schematisierte Darstellung einer beispielhaften Konfiguration von Schnittstellen der Konfiguration gemäß Figur 11B,
- Figur 13: eine schematisierte Darstellung einer beispielhaften Konfiguration einer weiteren Ausführungsform eines Systems.

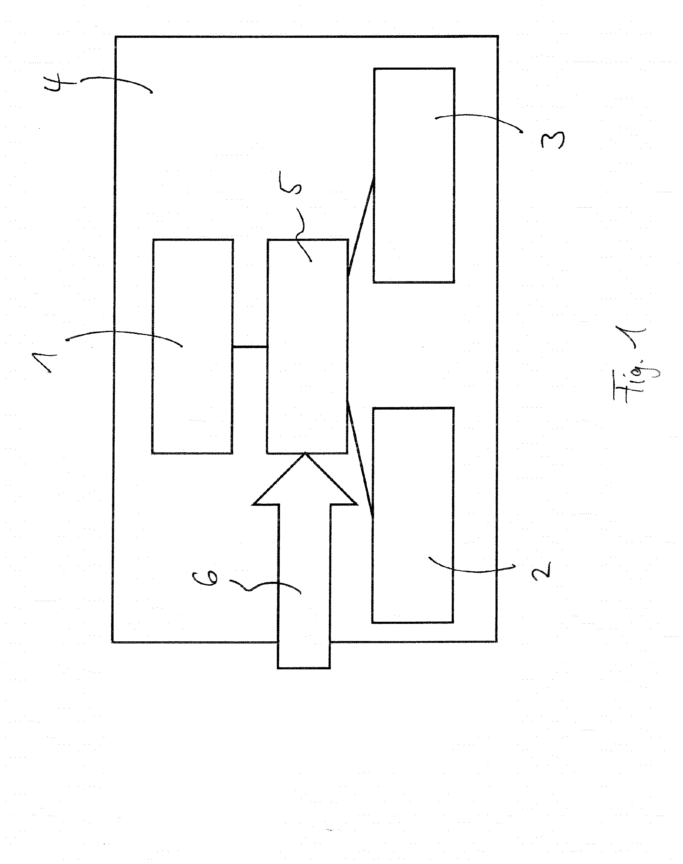

Figur 1 zeigt eine schematisierte Darstellung einer beispielhaften Ausführungsform eines Kommunikationsnetzwerkes 4. Das Kommunikationsnetzwerk 4 umfasst in dieser Ausführungsform mehrere Komponenten 1, 2 und 3 sowie ein Kommunikationssteuersystem 5. Das Kommunikationssteuersystem 5 ist in dieser Ausführungsform zentral zwischen die verschiedenen Komponenten 1, 2 und 3 geschaltet, so dass eine Kommunikation zwischen den Komponenten 1, 2 und 3 jeweils über das Kommunikationssteuersystem 5 geleitet wird. Das Kommunikationssteuersystem 5 ist derart konfiguriert, dass eine Kommunikation zwischen den Komponenten 1, 2 und 3 anhand von vordefinierten Kommunikationsszenarien in Abhängigkeit von einem Eintreten eines Ereignisses oder einer Bedingung 6 situationsabhängig gesteuert, beeinflusst, modifiziert oder geändert werden kann. Das bedeutet, dass das Kommunikationssteuersystem 5 Art, Umfang oder Inhalt der Kommunikation zwischen den Komponenten 1, 2 und 3 beeinflusst. Insbesondere beeinflusst das Kommunikationssteuersystem 5 die Kommunikation zwischen den Komponenten 1, 2 und 3 derart, dass der bestehende Kommunikationsinhalt (von den Komponenten erzeugter bzw. zu empfangender Inhalt) situationsabhängig verändert, unterdrückt oder komplett ersetzt wird bzw. ein neuer (noch nicht bestehender) Kommunikationsinhalt erschaffen wird.

Das Kommunikationssteuersystem 5 unterscheidet sich insbesondere von einem herkömmlichen Firewall-System dahingehend, dass die Kommunikation bzw. der Kommunikationsinhalt zwischen den Komponenten 1, 2 und 3 beispielsweise unabhängig von Netzwerkparametern bzw. Kommunikationsparametern der Komponenten 1, 2 und 3 oder des Kommunikationsnetzwerkes 4 beeinflusst wird. Solche Netzwerkparameter oder Kommunikationsparameter sind zum Beispiel Zertifikate, MAC-Adressen, IP-Adressen, Netzwerk-Ports, o.ä. Insbesondere unterscheidet sich die situationsabhängige Bedingung 6 beispielsweise von solchen Netzwerkparametern der Komponenten bzw. solchen Kommunikationsparametern der Komponenten innerhalb des Kommunikationsnetzwerkes.

Im Unterschied zu Firewall-Systemen, die eine Kommunikation zwischen den Komponenten 1, 2 und 3 regelbasiert in Abhängigkeit von Netzwerkparametern oder Kommunikationsparametern entweder zulassen oder blockieren, erlaubt das Kommunikationssteuersystem 5 der hier beschriebenen Art eine situationsabhängige Modifikation der Kommunikation zwischen den Komponenten 1, 2 und 3 in Abhängigkeit eines Eintretens einer Bedingung 6, die eine externe Umgebungsbedingung, ein Zustand des Gesamtsystems, ein Zustand des Kommunikationsnetzwerkes 4 oder ein Zustand einer oder mehrerer Komponenten 1, 2 oder 3 beschreibt.

Das Kommunikationssteuersystem 5 führt zum Beispiel eine Filterung (Einschränkung) der Kommunikation bzw. des Kommunikationsinhalts zwischen den Komponenten 1, 2 und 3 von einer/einem in einer bestimmten Situation oder einem bestimmten Zustand des Kommunikationsnetzwerkes 4 möglichen Kommunikation bzw. Kommunikationsinhalt in eine/einen gefilterte(n) (eingeschränkte(n)) Kommunikation bzw. Kommunikationsinhalt durch. Alternativ oder ergänzend kann das Kommunikationssteuersystem 5 eine Kommunikation bzw. einen Kommunikationsinhalt innerhalb des Kommunikationsnetzwerkes 4 zustandsabhängig oder situationsabhängig erweitern oder mit einer bestimmten Kommunikation bzw. einem bestimmten Kommunikationsinhalt ergänzen. Das Kommunikationssteuersystem 5 kann auch von sich aus eine neue Kommunikation bzw. einen neuen Kommunikationsinhalt initiieren und z.B. bestimmte Kommunikationssignale an eine oder mehrere der Komponenten 1, 2 und 3 aussenden.

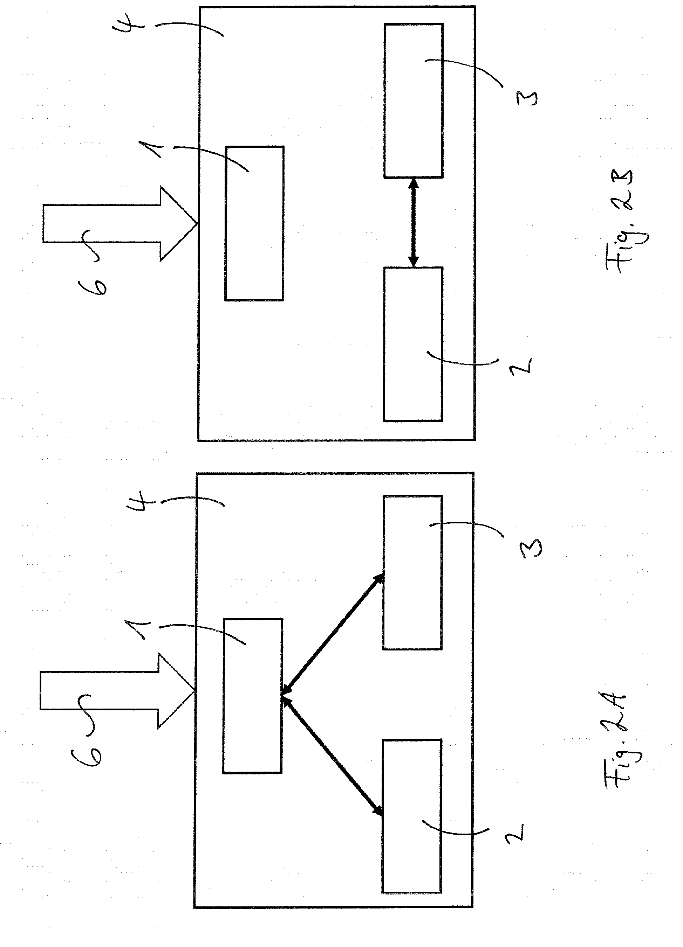

Die Figuren 2A und 2B zeigen schematisierte Darstellungen von möglichen Beeinflussungen einer Kommunikation innerhalb des Kommunikationsnetzwerkes 4 gemäß Figur 1. Das Kommunikationssteuersystem 5 ist in diesen Beispielen der Einfachheit halber weggelassen und quasi transparent. Gemäß Figur 2A erfolgt eine Modifikation der Kommunikation durch das Kommunikationssteuersystem 5 derart, dass aufgrund eines Ereignisses bzw. einer Bedingung 6, die durch das Kommunikationssteuersystem 5 erkannt worden ist, lediglich eine Kommunikation jeweils zwischen der Komponente 1 und der Komponente 2 bzw. zwischen der Komponente 1 und der Komponente 3 zugelassen wird. Eine Kommunikation bzw. deren Kommunikationsinhalt zwischen der Komponente 2 und der Komponente 3, die aufgrund der Zustände der Komponenten 2 und 3 möglich wäre, wird jedoch durch das Kommunikationssteuersystem 5 unterdrückt. Gemäß Figur 2B erfolgt dagegen eine Modifikation der Kommunikation bzw. deren Kommunikationsinhalt durch das Kommunikationssteuersystem 5 derart, dass aufgrund eines Ereignisses bzw. einer Bedingung 6, die durch das Kommunikationssteuersystem 5 erkannt worden ist, lediglich eine Kommunikation bzw. deren Kommunikationsinhalt zwischen den Komponenten 2 und 3 zugelassen wird. Eine Kommunikation bzw. deren Kommunikationsinhalt mit der Komponente 1, die aufgrund des Zustands der Komponente 1 möglich wäre, wird jedoch durch das Kommunikationssteuersystem 5 unterdrückt.

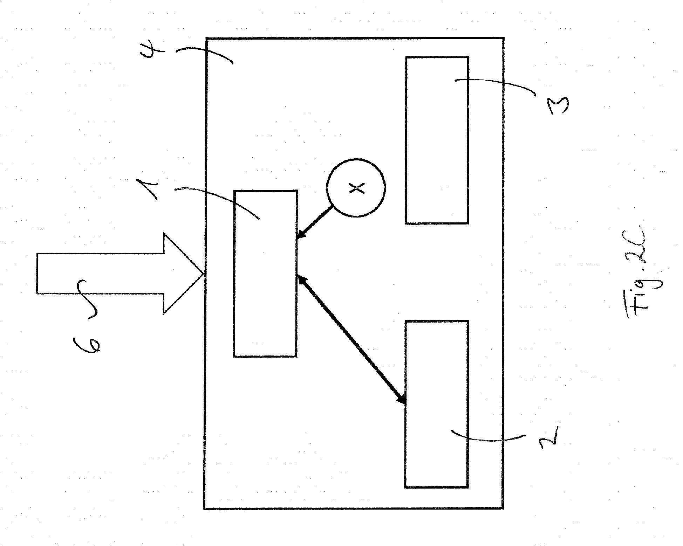

Figur 2C zeigt eine schematisierte Darstellung einer weiteren Beeinflussung der Kommunikation innerhalb des Kommunikationsnetzwerkes gemäß Figur 1. Gemäß Figur 2C erfolgt eine Modifikation der Kommunikation bzw. deren Kommunikationsinhalt durch das Kommunikationssteuersystem 5 derart, dass aufgrund eines Ereignisses bzw. einer Bedingung 6, die durch das Kommunikationssteuersystem 5 erkannt worden ist, lediglich eine Kommunikation bzw. deren Kommunikationsinhalt zwischen den Komponenten 1 und 2 zugelassen wird. Eine Kommunikation bzw. deren Kommunikationsinhalt mit der Komponente 3, die aufgrund des Zustands der Komponente 3 möglich wäre, wird jedoch durch das Kommunikationssteuersystem 5 unterdrückt. Dieser Fall kann zum Beispiel eintreten, wenn das Kommunikationssteuersystem 5 über die Bedingung 6 erkannt hat oder vermutet, dass in Komponente 3 ein Fehlerfall oder ein sicherheitskritischer Problemfall (zweifelhafte Integrität der Komponente 3) vorliegt. In diesem Szenario kann das Kommunikationssteuersystem 5 seinerseits zum Beispiel an die Komponente 1 ein Kommunikationssignal senden, um der Komponente 1 anzuzeigen, dass eine Kommunikation mit der Komponente 3 verboten ist und unterdrückt wird. Die Komponente 1 kann ihre Kommunikation mit der Komponente 2 fortsetzen.

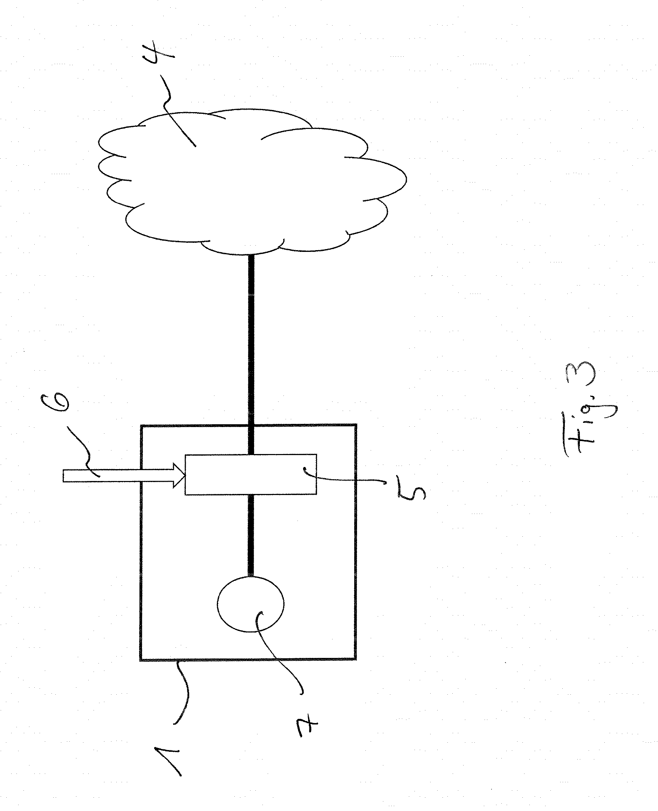

Figur 3 zeigt eine schematisierte Darstellung einer beispielhaften Ausführungsform einer Komponente 1 in Form eines Gerätes 1, das in ein Kommunikationsnetzwerk 4 eingebunden ist. Das Gerät 1 weist eine Gerätenutzfunktion 7 sowie ein Kommunikationssteuersystem 5 auf.

Die Gerätenutzfunktion 7 beschreibt eine Funktion bzw. die Hauptfunktion des Gerätes 1, die zum Beispiel durch eine Software-Applikation, eine Hardware-Funktionalität wie einen oder mehrere Sensoren, Aktuatoren, Sende- /Empfangseinrichtungen, Kommunikationsschnittstellen oder eine Kombination eines oder mehrerer dieser Komponenten realisiert ist.

Das Kommunikationssteuersystem 5 ist derart konfiguriert, dass eine Kommunikation von oder nach außerhalb des Gerätes 1, d.h. vom sonstigen Kommunikationsnetzwerk 4 in Richtung innerhalb des Gerätes 1 oder von innerhalb des Gerätes 1 in Richtung des sonstigen Kommunikationsnetzwerkes 4 initiiert, gesteuert, beeinflusst, modifiziert oder geändert werden kann. Insbesondere ist das Kommunikationssteuersystem 5 gemäß Figur 3 derart im Gerät 1 konfiguriert, dass eine Kommunikation (bzw. Kommunikationsinhalt) der Gerätenutzfunktion 7 in eine beeinflusste, veränderte oder modifizierte Kommunikation (bzw. Kommunikationsinhalt) innerhalb des Kommunikationsnetzwerkes 4 umgesetzt wird oder eine Kommunikation (bzw. Kommunikationsinhalt) innerhalb des Kommunikationsnetzwerkes 4 in eine beeinflusste, veränderte oder modifizierte Kommunikation (bzw. Kommunikationsinhalt) der Gerätenutzfunktion 7 umgesetzt wird. Das Kommunikationssteuersystem 5 ist somit einer Kommunikation des Kommunikationsnetzwerkes 4 und einer Kommunikation der Gerätenutzfunktion 7 im Gerät 1 zwischengeschaltet.

Das Kommunikationssteuersystem 5 ist derart konfiguriert, dass eine Kommunikation von oder nach außerhalb des Gerätes 1 anhand von vordefinierten Kommunikationsszenarien in Abhängigkeit von einem Eintreten eines Ereignisses oder einer Bedingung 6 situationsabhängig initiiert, gesteuert, beeinflusst, modifiziert oder geändert werden kann. Das bedeutet, dass das Kommunikationssteuersystem 5 Art, Umfang oder Inhalt der Kommunikation zwischen den Komponenten 1, 2 und 3 beeinflusst bzw. ändert. Insbesondere beeinflusst das Kommunikationssteuersystem 5 die Kommunikation vom und zum Gerät 1 derart, dass der bestehende Kommunikationsinhalt (vom Gerät 1 erzeugter bzw. zu empfangender Inhalt) situationsabhängig verändert, unterdrückt oder komplett ersetzt wird bzw. ein neuer (noch nicht bestehender) Kommunikationsinhalt erschaffen wird.

Das Kommunikationssteuersystem 5 unterscheidet sich insbesondere von einem herkömmlichen Firewall-System beispielsweise dahingehend, dass die Kommunikation von oder nach außerhalb des Gerätes 1 unabhängig von Netzwerkparametern oder Kommunikationsparametern oder vom Nutzdatenverkehr des Gerätes 1 oder des sonstigen Kommunikationsnetzwerkes 4 gesteuert wird. Derartige Netzwerkparameter oder Kommunikationsparameter sind zum Beispiel Zertifikate, Signaturen, MAC-Adressen, IP-Adressen, Netzwerk-Ports, o.ä. Insbesondere unterscheidet sich die situationsabhängige Bedingung 6 beispielsweise von solchen Netzwerkparametern des Gerätes 1 oder solchen Kommunikationsparametern des Gerätes 1 oder von einem Nutzdatenverkehr innerhalb des Kommunikationsnetzwerkes 4.

Im Unterschied zu Firewall-Systemen, die eine Kommunikation von oder nach außerhalb des Gerätes 1 regelbasiert in Abhängigkeit von Netzwerkparametern oder Kommunikationsparametern oder vom Nutzdatenverkehr entweder zulassen oder blockieren, erlaubt das Kommunikationssteuersystem 5 der hier beschriebenen Art eine situationsabhängige Initiierung oder Modifikation der Kommunikation von oder nach außerhalb des Gerätes 1 in Abhängigkeit eines Eintretens einer Bedingung 6, die beispielsweise eine externe Umgebungsbedingung, ein Zustand des Gerätes 1 oder ein Zustand des Kommunikationsnetzwerkes 4 beschreibt.

Das Kommunikationssteuersystem 5 führt zum Beispiel von oder nach außerhalb des Gerätes 1 eine Filterung (Einschränkung) einer in einer bestimmten Situation oder einem bestimmten Zustand des Gerätes 1 oder des Kommunikationsnetzwerkes 4 möglichen Kommunikation in eine gefilterte (eingeschränkte) Kommunikation durch. Alternativ oder ergänzend kann das Kommunikationssteuersystem 5 eine Kommunikation von oder nach außerhalb des Gerätes 1 zustandsabhängig oder situationsabhängig initiieren, erweitern oder mit einer bestimmten Kommunikation ergänzen oder den Inhalt der Kommunikation zumindest teilweise mit einem anderen Inhalt austauschen.

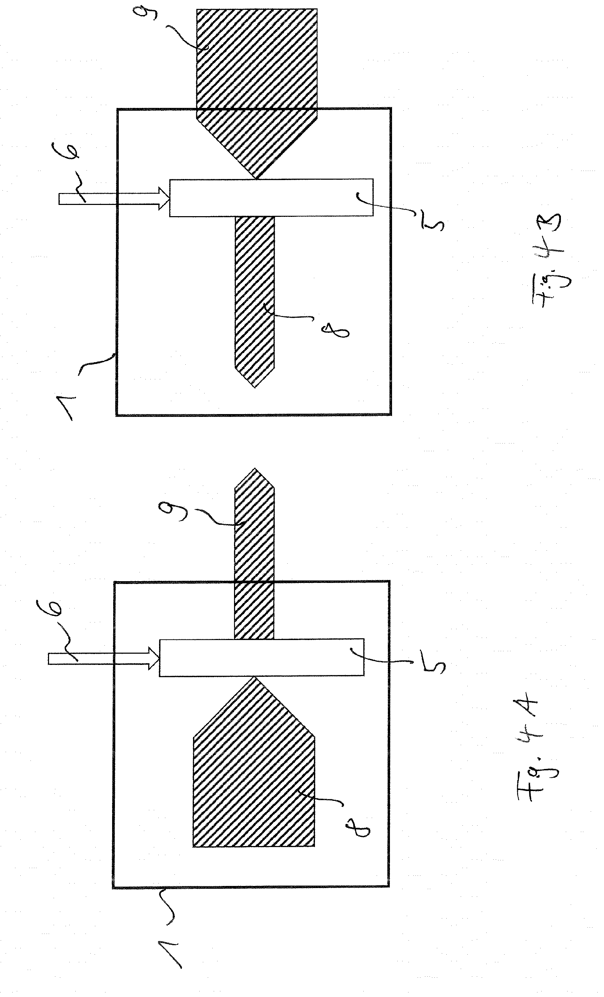

Die Figuren 4A bis 4H zeigen schematisierte Darstellungen verschiedener beispielhafter Zustände einer Beeinflussung der Kommunikation von und nach außerhalb des Gerätes 1 bzw. zwischen der Gerätenutzfunktion 7 und dem Kommunikationsnetzwerk 4 gemäß Figur 3. Alternativ zeigen die Figuren 4A bis 4H schematisierte Darstellungen verschiedener beispielhafter Zustände einer Beeinflussung der Kommunikation einer Komponente bzw. eines Gerätes 1 innerhalb eines Kommunikationsnetzwerkes gemäß Figur 1.

Gemäß Figur 4A erfolgt eine Modifikation der Kommunikation von innerhalb des Gerätes 1, z.B. initiiert durch die Gerätenutzfunktion 7, nach außerhalb des Gerätes 1 in das Kommunikationsnetzwerk 4 mittels des Kommunikationssteuersystems 5. Das Kommunikationssteuersystem 5 beeinflusst den Kommunikationsinhalt dabei derart, dass aufgrund eines Ereignisses bzw. einer Bedingung 6, die durch das Kommunikationssteuersystem 5 erkannt worden ist, eine Geräte-interne Kommunikation 8 (zum Beispiel eine Kommunikation der Gerätenutzfunktion 7) in eine demgegenüber in ihrem Inhalt eingeschränkte, beschränkte, bzw. reduzierte Netzwerk-Kommunikation 9 innerhalb des Kommunikationsnetzwerkes 4 umgesetzt wird. Beispielsweise werden bestimmte Nutzdaten und/oder Steuerbefehle in der Geräte-internen Kommunikation 8 durch das Kommunikationssteuersystem 5 herausgefiltert bzw. unterdrückt.

Gemäß Figur 4B erfolgt eine Modifikation der Kommunikation aus dem Kommunikationsnetzwerk 4 (z.B. initiiert durch ein anderes Gerät im Kommunikationsnetzwerk 4), nach innerhalb des Gerätes 1 mittels des Kommunikationssteuersystems 5. Das Kommunikationssteuersystem 5 beeinflusst den Kommunikationsinhalt dabei derart, dass aufgrund eines Ereignisses bzw. einer Bedingung 6, die durch das Kommunikationssteuersystem 5 erkannt worden ist, eine Netzwerk-Kommunikation 9 aus dem Kommunikationsnetzwerk 4 in eine demgegenüber in ihrem Inhalt eingeschränkte, beschränkte, bzw. reduzierte Geräte-interne Kommunikation 8 (zum Beispiel eine Kommunikation der Gerätenutzfunktion 7) umgesetzt wird. Beispielsweise werden bestimmte Nutzdaten und/oder Steuerbefehle in der Netzwerk-Kommunikation 9 durch das Kommunikationssteuersystem 5 herausgefiltert bzw. unterdrückt oder wird die Kommunikation alternativ komplett unterdrückt.

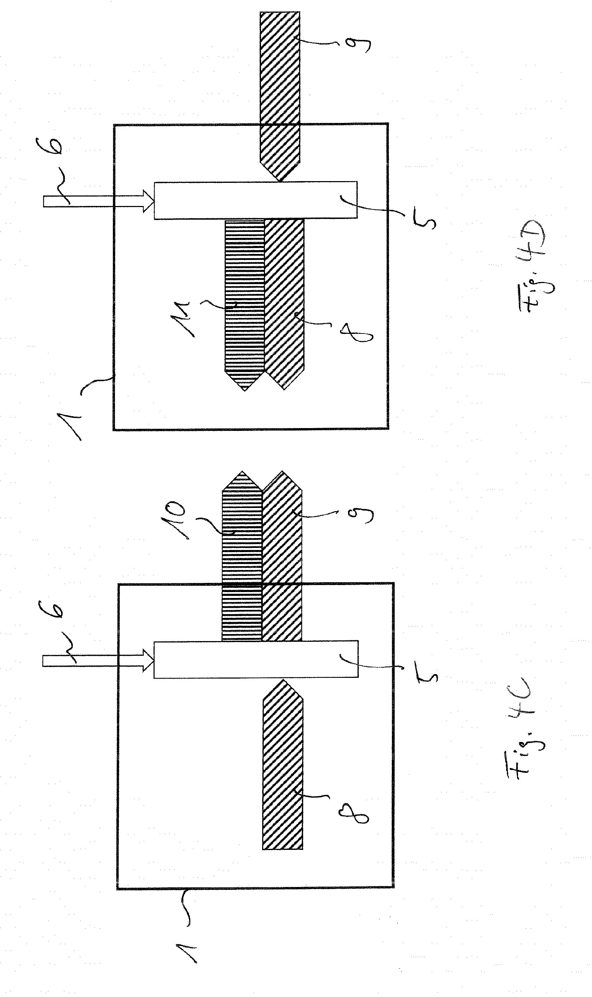

Gemäß Figur 4C erfolgt eine alternative Modifikation der Kommunikation von innerhalb des Gerätes 1, z.B. initiiert durch die Gerätenutzfunktion 7, nach außerhalb des Gerätes 1 in das Kommunikationsnetzwerk 4 mittels des Kommunikationssteuersystems 5. Das Kommunikationssteuersystem 5 beeinflusst den Kommunikationsinhalt dabei derart, dass aufgrund eines Ereignisses bzw. einer Bedingung 6, die durch das Kommunikationssteuersystem 5 erkannt worden ist, eine Geräte-interne Kommunikation 8 (zum Beispiel eine Kommunikation der Gerätenutzfunktion 7) in eine demgegenüber inhaltsgleiche Netzwerk-Kommunikation 9 umgesetzt wird, wobei zusätzlich eine weitere Netzwerk-Kommunikation 10 mit zusätzlichem Inhalt durch die Kommunikationssteuerung 5 hinzugefügt worden ist. Beispielsweise werden bestimmte Nutzdaten und/oder Steuerbefehle in der weiteren Netzwerk-Kommunikation 10 durch das Kommunikationssteuersystem 5 hinzugefügt, die situationsbedingt eine bestimmte Beeinflussung der Netzwerk-Kommunikation bewirken, die über den Inhalt der ursprünglichen Geräte-internen Kommunikation 8 hinausgehen.

Gemäß Figur 4D erfolgt eine alternative Modifikation der Kommunikation aus dem Kommunikationsnetzwerk 4 (z.B. initiiert durch ein anderes Gerät im Kommunikationsnetzwerk 4), nach innerhalb des Gerätes 1 mittels des Kommunikationssteuersystems 5. Das Kommunikationssteuersystem 5 beeinflusst den Kommunikationsinhalt dabei derart, dass aufgrund eines Ereignisses bzw. einer Bedingung 6, die durch das Kommunikationssteuersystem 5 erkannt worden ist, eine Netzwerk-Kommunikation 9 in eine demgegenüber inhaltsgleiche Geräte-interne Kommunikation 8 (zum Beispiel eine Kommunikation für die Gerätenutzfunktion 7) umgesetzt wird, wobei zusätzlich eine weitere Geräte-interne Kommunikation 11 mit zusätzlichem Inhalt (zum Beispiel eine zusätzliche Kommunikation für die Gerätenutzfunktion 7) durch das Kommunikationssteuersystem 5 hinzugefügt worden ist. Beispielsweise werden bestimmte Nutzdaten und/oder Steuerbefehle in der weiteren Geräte-internen Kommunikation 11 durch das Kommunikationssteuersystem 5 hinzugefügt, die situationsbedingt eine bestimmte Beeinflussung der Geräte-internen Kommunikation bewirken, die über den Inhalt der ursprünglichen Netzwerk-Kommunikation 9 hinausgehen.

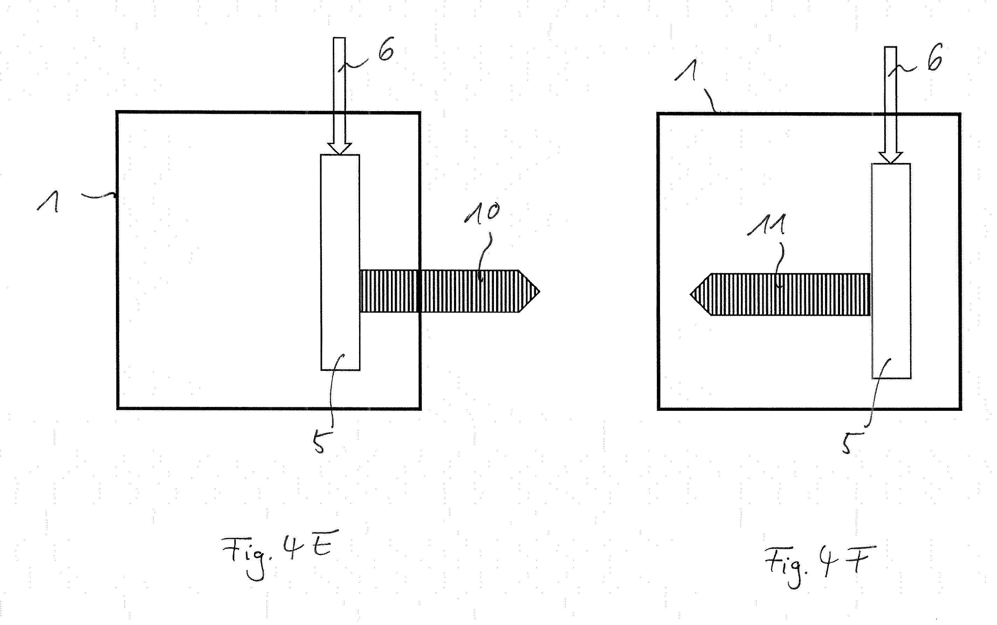

Gemäß den Figuren 4E und 4F erfolgt eine alternative Modifikation der Kommunikation. Das Kommunikationssteuersystem 5 initiiert dabei eine neue Kommunikation derart, dass aufgrund eines Ereignisses bzw. einer Bedingung 6, die durch das Kommunikationssteuersystem 5 erkannt worden ist, eine neu geschaffene Geräte-externe Kommunikation 10 (Figur 4E) bzw. eine neu geschaffene Geräte-interne Kommunikation 11 (Figur 4F) mit neuem Inhalt (zum Beispiel eine initiierte Kommunikation für die Gerätenutzfunktion 7) durch das Kommunikationssteuersystem 5 erschaffen worden ist.

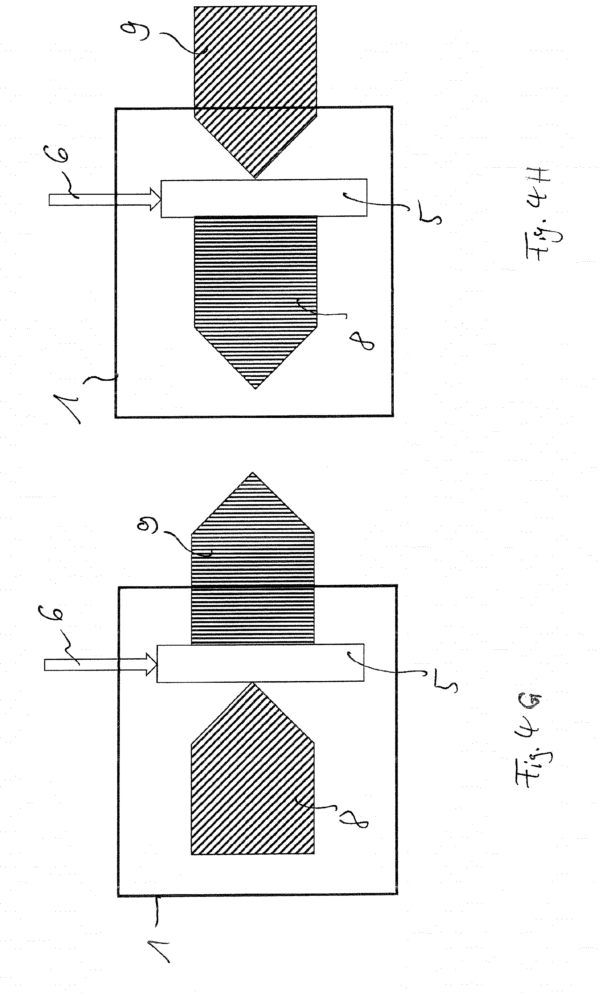

Gemäß Figur 4G erfolgt eine alternative Modifikation der Kommunikation von innerhalb des Gerätes 1, z.B. initiiert durch die Gerätenutzfunktion 7, nach außerhalb des Gerätes 1 in das Kommunikationsnetzwerk 4 mittels des Kommunikationssteuersystems 5. Das Kommunikationssteuersystem 5 beeinflusst den Kommunikationsinhalt dabei derart, dass aufgrund eines Ereignisses bzw. einer Bedingung 6, die durch das Kommunikationssteuersystem 5 erkannt worden ist, eine Geräte-interne Kommunikation 8 (zum Beispiel eine Kommunikation der Gerätenutzfunktion 7) in eine demgegenüber in ihrem Inhalt ausgetauschte bzw. geänderte Netzwerk-Kommunikation 9 innerhalb des Kommunikationsnetzwerkes 4 umgesetzt wird. Beispielsweise werden bestimmte Nutzdaten und/oder Steuerbefehle in der Geräte-internen Kommunikation 8 mittels des Kommunikationssteuersystems 5 durch zumindest teilweise oder vollständig andere oder modifizierte Nutzdaten und/oder Steuerbefehle in der Netzwerk-Kommunikation 9 ersetzt.

Gemäß Figur 4H erfolgt eine alternative Modifikation der Kommunikation aus dem Kommunikationsnetzwerk 4 (z.B. initiiert durch ein anderes Gerät im Kommunikationsnetzwerk 4), nach innerhalb des Gerätes 1 mittels des Kommunikationssteuersystems 5. Das Kommunikationssteuersystem 5 beeinflusst den Kommunikationsinhalt dabei derart, dass aufgrund eines Ereignisses bzw. einer Bedingung 6, die durch das Kommunikationssteuersystem 5 erkannt worden ist, eine Netzwerk-Kommunikation 9 aus dem Kommunikationsnetzwerk 4 in eine demgegenüber in ihrem Inhalt ausgetauschte bzw. geänderte Geräte-interne Kommunikation 8 (zum Beispiel eine Kommunikation der Gerätenutzfunktion 7) umgesetzt wird. Beispielsweise werden bestimmte Nutzdaten und/oder Steuerbefehle in der Netzwerk-Kommunikation 9 mittels des Kommunikationssteuersystems 5 durch zumindest teilweise oder vollständig andere oder modifizierte Nutzdaten und/oder Steuerbefehle in der Geräte-internen Kommunikation 8 ersetzt.

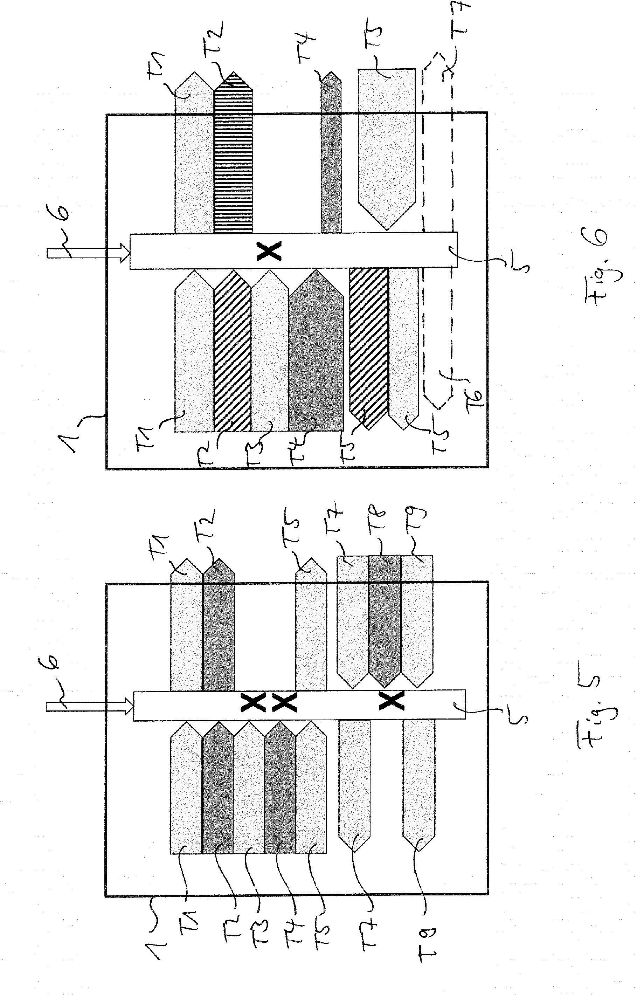

Die Figuren 5 und 6 zeigen nochmals Kombinationen verschiedener Beeinflussungen unterschiedlicher Kommunikationsthemen von und nach außerhalb des Gerätes 1 gemäß den vorangegangenen Figuren. In Figur 5 werden die Kommunikationsthemen T1, T2 und T5 einer Geräte-internen Kommunikation mittels des Kommunikationssteuersystems 5 unverändert nach außerhalb des Gerätes 1 in das Kommunikationsnetzwerk 4 geleitet. Die Kommunikationsthemen T3 und T4 der Geräte-internen Kommunikation werden jedoch durch das Kommunikationssteuersystem 5 derart unterdrückt, dass sie nicht nach außerhalb des Gerätes 1 weitergeleitet werden. Demgegenüber werden die Kommunikationsthemen T7 und T9 einer Netzwerk-Kommunikation mittels des Kommunikationssteuersystems 5 unverändert in eine Geräte-interne Kommunikation (zum Beispiel eine Kommunikation der Gerätenutzfunktion 7) weitergeleitet. Das Kommunikationsthema T8 der Netzwerk-Kommunikation wird jedoch durch das Kommunikationssteuersystem 5 derart unterdrückt, dass es nicht in eine Geräte-interne Kommunikation umgesetzt wird.

In Figur 6 werden verschiedene Kommunikationsthemen einer Geräte-internen Kommunikation durch das Kommunikationssteuersystem 5 unterschiedlich beeinflusst. Das Kommunikationsthema T1 wird unverändert in eine Netzwerk-Kommunikation umgesetzt. Das Kommunikationsthema T2 wird inhaltlich modifiziert bzw. in dessen Inhalt ausgetauscht und in dieser modifizierten Form in eine Netzwerk-Kommunikation umgesetzt. Das Kommunikationsthema T3 wird gänzlich unterdrückt. Das Kommunikationsthema T4 schließlich wird inhaltlich eingeschränkt bzw. begrenzt und in dieser begrenzten Form in eine Netzwerk-Kommunikation umgesetzt.

Alternativ oder ergänzend wird eine Netzwerk-Kommunikation gemäß Figur 6 durch das Kommunikationssteuersystem 5 modifiziert. So wird das Kommunikationsthema T5 beispielhaft sowohl in dessen Inhalt eingeschränkt bzw. begrenzt als auch zusätzlich mit weiterem Inhalt ergänzt, so dass daraus eine Geräte-interne Kommunikation (siehe zwei getrennte Themenblöcke T5) umgesetzt wird. Alternativ oder ergänzend initiiert das Kommunikationssteuersystem 5 von sich aus eine neue Geräte-interne Kommunikation T6 und/oder eine neue Netzwerk-Kommunikation T7.

Der Einsatz bzw. die Konfiguration der zu den Figuren 4A bis 6 erläuterten Beeinflussungen der Kommunikation bzw. der Kommunikationsthemen wird beispielsweise in einer von der konkreten Implementierung der Geräte 1 unabhängigen Art und Weise (abstrakt) und entsprechend vereinfacht durchgeführt, beispielsweise unter Verwendung von Kommunikationsthemen in einer abstrakten Grammatik/Hochsprache, die sich von einer geräteabhängigen konkreteren Verarbeitung (Grammatik/niedere Sprache) unterscheidet.

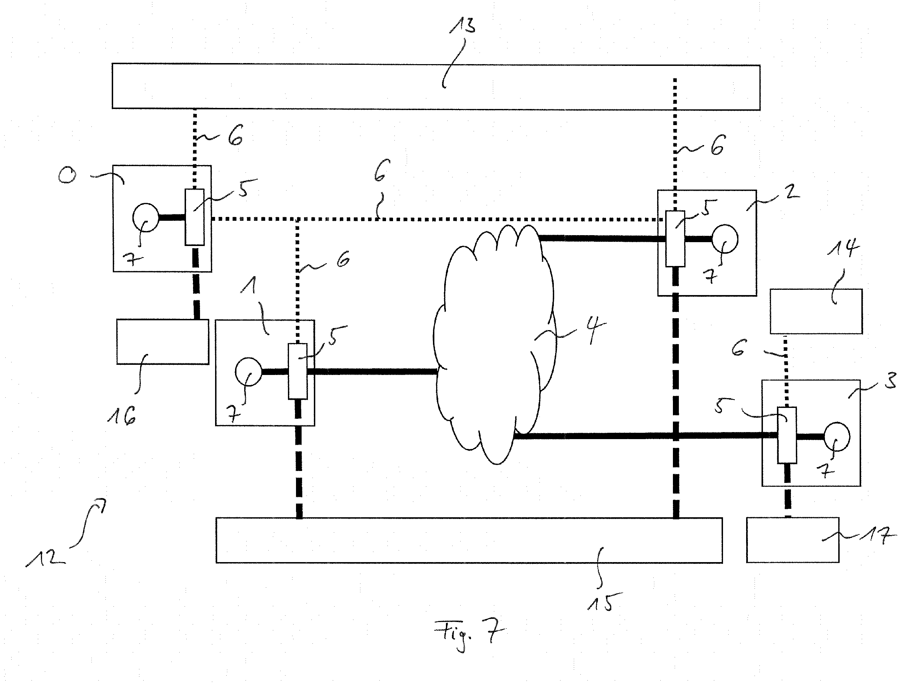

Figur 7 zeigt eine schematisierte Darstellung einer beispielhaften Ausführungsform eines Systems 12 mit mehreren Geräten 0, 1, 2 und 3, die z.B. jeweils analog zum Gerät 1 gemäß Figur 3 konfiguriert sind. Das System 12 ist beispielsweise ein cyber-physisches System.

In der Konfiguration gemäß Figur 7 sind drei Geräte 1, 2 und 3 im System 12 eingebunden, die zu einer gegenseitigen Kommunikation im Kommunikationsnetzwerk 4 zusammengeschlossen sind. Über das Kommunikationsnetzwerk 4 können die Geräte 1, 2 und 3 untereinander kommunizieren. Zudem ist ein Gerät 0 eingerichtet, das in der beispielhaften Konfiguration in Figur 7 über eine vom Kommunikationsnetzwerk 4 separate Signalisierung eine Bedingung 6 an die Geräte 1 und 2 signalisieren kann.

Jedes der Geräte 0, 1, 2 und 3 umfasst beispielhaft eine Gerätenutzfunktion 7 sowie ein Kommunikationssteuersystem 5 mit den oben erläuterten Funktionalitäten. Des Weiteren umfasst das System 12 die Module 13 und 14 für eine beispielhafte Signalisierung an die jeweiligen Kommunikationssteuersysteme 5 der Geräte 0 und 2 bzw. 3. Über die Module 13 und 14 werden die Kommunikationssteuersysteme 5 in den jeweiligen Geräten 0, 2 und 3 beispielsweise aktiviert oder deaktiviert. Alternativ oder ergänzend wird über die Module 13 und 14 eine situationsabhängige Bedingung 6 ausgelöst, die wiederum die Beeinflussung des Inhalts der Kommunikation durch die einzelnen Kommunikationssteuersysteme 5 der Geräte 0, 2 und 3 bewirkt. Beispielsweise erfolgt durch die Module 13 oder 14 eine Betätigung einer Schalteinrichtung, die als Eintreten einer situationsabhängigen Bedingung 6 von den jeweiligen Kommunikationssteuersystemen 5 detektiert wird. In der Konfiguration gemäß Figur 7 steuert das Modul 13 die Kommunikationssteuersysteme 5 der Geräte 0 und 2, während das Modul 14 das Kommunikationssteuersystem 5 des Gerätes 3 steuert.

In der beispielhaften Implementierung gemäß Figur 7 beeinflusst das Gerät 0 selbst keine Kommunikation zwischen dem Kommunikationsnetzwerk 4 und den Geräten 1, 2, 3 sondern ermittelt eine situationsabhängige Bedingung für die Geräte 1 und 2. Über das Gerät 0 werden die Kommunikationssteuersysteme 5 in den jeweiligen Geräten 1 und 2 beispielsweise aktiviert oder deaktiviert. Alternativ oder ergänzend wird über das Gerät 0 eine situationsabhängige Bedingung 6 ausgelöst, die wiederum die Beeinflussung des Inhalts der Kommunikation durch die einzelnen Kommunikationssteuersysteme 5 der Geräte 1 und 2 bewirkt.

Das System 12 gemäß Figur 7 umfasst des Weiteren ein Modul 15 zur Konfiguration der Kommunikationssteuersysteme 5 der Geräte 1 und 2 sowie weitere Module 16 und 17 zur Konfiguration der Kommunikationssteuersysteme 5 der Geräte 0 und 3. Durch die Module 15, 16 und 17 können die jeweiligen Kommunikationssteuersysteme 5 mit oben erläuterten Kommunikationsszenarios, -regeln oder -themen vorkonfiguriert werden, die eine Beeinflussung der Kommunikation steuern. Eine Konfiguration eines jeweiligen Kommunikationssteuersystems 5 wird weiter unten näher erläutert.

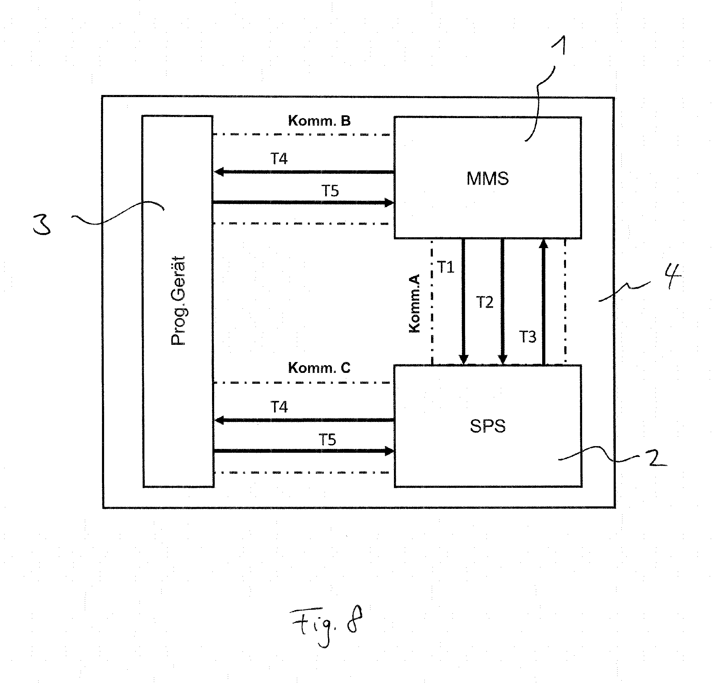

Figur 8 zeigt eine schematisierte Darstellung einer beispielhaften Konfiguration von Komponenten eines Kommunikationsnetzwerkes 4. Das Kommunikationsnetzwerk 4 ist beispielsweise in einem cyber-physischen System eingerichtet. Figur 8 zeigt drei Komponenten 1, 2, 3. Komponente 1 ist z. B. eine Mensch-Maschine-Schnittstelle (MMS). Komponente 2 ist z. B. eine Sicherheitssteuerung oder programmierbare Steuerung (SPS). Komponente 3 ist z. B. ein Programmiergerät. Die Komponenten 1, 2 und 3 sind als Kommunikationsverbund innerhalb des Kommunikationsnetzwerkes 4 kommunikativ zusammengeschlossen/verbunden. Das bedeutet, dass die Komponenten 1, 2 und 3 eingerichtet sind, ggf. in verschiedenen Zuständen und Betriebsmodi, miteinander auf verschiedene Weise kommunizieren und diverse Kommunikationssignale und Informationen austauschen zu können. Die beispielhafte Konfiguration gemäß Figur 8 zeigt verschiedene Kommunikationsstränge A, B und C, Kommunikationsstrang A zwischen Komponente 1 und 2, Kommunikationsstrang B zwischen Komponente 1 und 3 sowie Kommunikationsstrang C zwischen Komponente 2 und 3. Innerhalb der verschiedenen Kommunikationsstränge A, B und C sind system- oder konfigurationsbedingt verschiedene Kommunikationen (Kommunikationsthemen) T1 bis T3 in Kommunikationsstrang A, T4 und T5 jeweils in Kommunikationsstrang B und C eingerichtet. Diese verschiedenen Kommunikationen sind aufgrund der grundlegenden Konfiguration/Funktion der Komponenten und Geräte des Systems bzw. anhand von Kommunikationsszenarien oder -regeln vorkonfiguriert. Die Verwendung bzw. Konfiguration der Kommunikationsthemen kann in einer von der konkreten Implementierung der Komponenten und Geräte unabhängigen Art und Weise (abstrakt) und entsprechend vereinfacht durchgeführt werden, beispielsweise unter Verwendung von Kommunikationsthemen in einer abstrakten Grammatik/Hochsprache, die sich von einer geräteabhängigen konkreteren Verarbeitung (Grammatik/niedere Sprache) unterscheidet.

Im Kommunikationsnetzwerk 4 gemäß der Konfiguration in Figur 8 ist auch ein zentral eingerichtetes Kommunikationssteuersystem 5 vorgesehen, das jedoch der Einfachheit halber in Figur 8 nicht dargestellt ist, um die verschiedenen Kommunikationsstränge A, B und C zu veranschaulichen. Das Kommunikationssteuersystem 5 ist in der Konfiguration gemäß Figur 8 beispielhaft jeglicher Kommunikation zwischen den Komponenten 1, 2 und 3 zwischengeschaltet. Das bedeutet, dass jegliche Kommunikation zwischen den Komponenten 1, 2 und 3 über das Kommunikationssteuersystem 5 geleitet wird. Das Kommunikationssteuersystem 5 ist eingerichtet die Kommunikation zwischen den Komponenten 1, 2 und 3 situationsabhängig zu steuern, beeinflussen bzw. zu modifizieren.

Beispielshaft angenommen, ein PLT-Sicherheitssystem steuert einen mechanischen, chemischen, thermischen Prozess. Das PLT-Sicherheitssystem (Automatisierungssystem) kann dann das Programmiergerät (Komponente 3, z.B. PC, Laptop, Mobile Device) umfassen, mit dem die Steuerung (Komponente 2, z. B. SPS) und die Mensch-Maschine-Schnittstelle (Komponente 1, MMS) programmiert werden sowie z. B. einige Sensoren parametriert und kalibriert werden.

Nachfolgend werden verschiedene beispielhafte Kommunikationsszenarien dargestellt, anhand derer das Kommunikationssteuersystem 5 der oben erläuterten Art eine entsprechende Kommunikation, eingeteilt in die verschiedenen Kommunikationsthemen situationsabhängig steuert bzw. modifiziert. Dies kann z. B. bedeuten, dass eine für einen oder mehrere Betriebszustände oder Betriebsmodi konfigurierte Kommunikation über sämtliche Kommunikationsstränge A, B und C in eine situationsabhängig von dem Kommunikationssteuersystem 5 vorgegebene, gemäß einem bestimmten Kommunikationsszenario z. B. auf Kommunikationsstrang A eingeschränkte Kommunikation geändert wird. Alternativ oder ergänzend kann auch eine für einen oder mehrere Betriebszustände oder Betriebsmodi konfigurierte Kommunikation z. B. über beide Kommunikationsthemen T4 und T5 des Kommunikationsstrangs B - beide Kommunikationsthemen T4 und T5 in Kommunikationsstrang B zugelassen - in eine situationsabhängig von dem Kommunikationssteuersystem 5 vorgegebene, gemäß einem bestimmten Kommunikationsszenario auf eines der Kommunikationsthemen T4 oder T5 des Kommunikationsstrangs B eingeschränkte (isolierte) Kommunikation geändert werden. Auf diese Weise wird lediglich ein eingeschränkter Kommunikationsinhalt eines der Kommunikationsthemen T4 oder T5 zugelassen.

Weitere Beispiele werden nachfolgend erläutert. In einem Beispiel wird generell zwischen zwei allgemeinen Situationen unterschieden, für die verschiedene Kommunikationsszenarien vorbereitet sind.

### Situation/Szenario 1 (Normalbetrieb):

Im Normalbetrieb des Systems soll sich der notwendige Kommunikationsumfang bzw. -inhalt auf eine Kommunikation zwischen Mensch-Maschine-Schnittstelle (Komponente 1) und Steuerung (Komponente 2), Kommunikationsstrang A, beschränken. Eine Kommunikation von oder zum Programmiergerät (Komponente 3, Kommunikationsstrang B oder C) ist nicht notwendig bzw. unerwünscht. Das Kommunikationssteuersystem 5 gibt diesen einzuschränkenden Kommunikationsumfang bzw. -inhalt durch die Auswahl und Einstellung des entsprechend vorgegebenen Kommunikationsszenarios und eine entsprechende Steuerung/Beschränkung der Kommunikation unter Heranziehung dieses Kommunikationsszenarios vor.

### Situation/Szenario 2 (Konfigurationsbetrieb):

Wird das System geändert oder neu programmiert, soll eine Verbindung zwischen Programmiergerät (Komponente 3) und Steuerung (Komponente 2) und/oder zwischen Programmiergerät (Komponente 3) und Mensch-Maschine-Schnittstelle (Komponente 1) notwendig sein, Kommunikationsstrang B bzw. C. Die Verbindung (Kommunikationsstrang A) zwischen Steuerung (Komponente 2) und Mensch-Maschine-Schnittstelle (Komponente 1) ist nicht notwendig bzw. unerwünscht. Das Kommunikationssteuersystem 5 gibt diesen gegenüber Situation/Szenario 1 veränderten Kommunikationsumfang bzw. - inhalt durch die Auswahl und Einstellung eines anderen vorgegebenen Kommunikationsszenarios und eine entsprechende Steuerung/Beschränkung der Kommunikation unter Heranziehung dieses anderen Kommunikationsszenarios vor.

Die nachfolgende Tabelle veranschaulicht eine solche über das Kommunikationssteuersystem 5 gesteuerte/vorgegebene Kommunikation.

| Kommunikationsstrang | Situation 1 | Situation 2 |
|---|---|---|
| A | zugelassen | unterdrückt |
| B | unterdrückt | zugelassen |
| C | unterdrückt | zugelassen |

Die Kommunikation bzw. deren Inhalt wird also abhängig von der Situation - gegebenenfalls abweichend von einer durch einen Zustand/Konfiguration der Komponenten 1, 2, 3 vorgegebenen, konfigurierten Kommunikation bzw. deren Inhalt - in Abhängigkeit von einem angewählten Kommunikationsszenario in eine erlaubte oder nicht erlaubte, eingeschränkte Kommunikation bzw. deren Inhalt gefahren. In dem obigen Beispiel wird je nach gewähltem Kommunikationsszenario durch das Kommunikationssteuersystem 5 ein kompletter Kommunikationsstrang (-kanal) A, B, C freigeschaltet oder gesperrt.

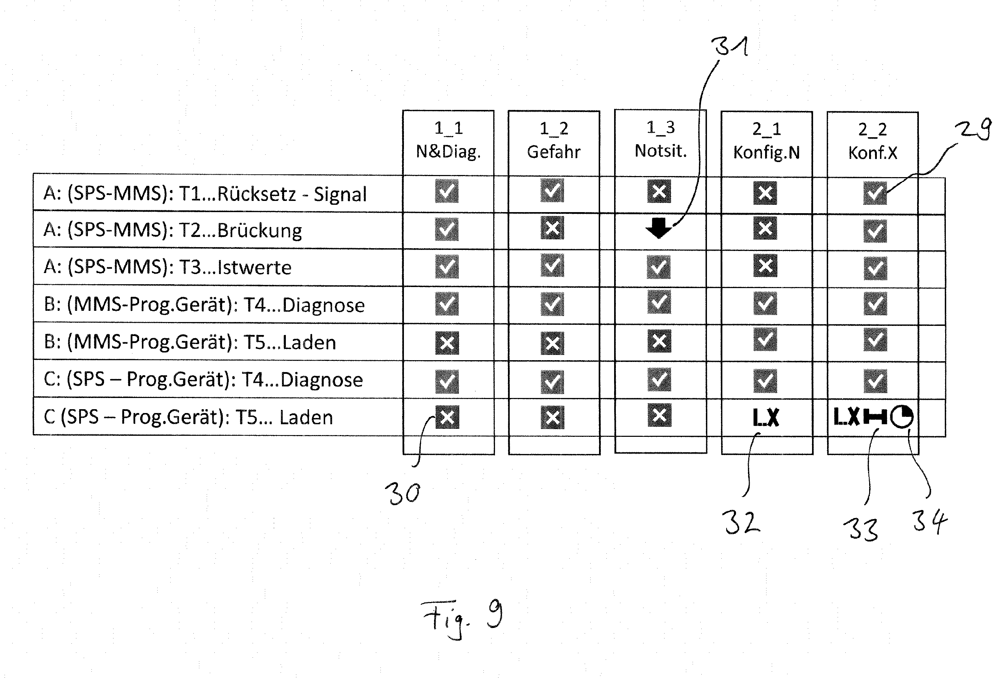

Für manche Anwendungen ist es sinnvoll die Steuerung auf bestimmte Kommunikationsthemen innerhalb eines Kommunikationsstranges anzuwenden (siehe folgende Erläuterungen und Übersicht in Figur 9).

### Situation/Szenario 1_1 Diagnosebetrieb:

Das System befindet sich im Betriebszustand. Veranlasst durch eine Störungsmeldung möchte der Wartungsingenieur von seinem Programmiergerät (Komponente 3) aus Diagnosedaten aus der Steuerung (Komponente 2) auslesen. Ein Download von Daten aus dem Programmiergerät (Komponente 3) in die Steuerung (Komponente 2) bzw. Mensch-Maschine-Schnittstelle (Komponente 1), Kommunikationsstrang C, Kommunikationsthema T5 "Laden" und Kommunikationsstrang B Kommunikationsthema T5 "Laden") ist nicht notwendig bzw. unerwünscht.

### Situation 1_2 Betrieb bei erhöhtem Gefährdungsgrad:

Das System befindet sich in Betrieb (wie in Situation/Szenario 1_1). Allerdings wird ein erhöhter Gefährdungsgrad erkannt. Der Kommunikationsumfang zwischen Mensch-Maschine Schnittstelle (Komponente 1) und Steuerung (Komponente 2) soll auf sichere Schaltbefehle eingeschränkt werden. Das sind Schaltbefehle, die nicht das Potenzial haben, das Gesamtsystem in ein gefährliches Stadium zu bringen (Kommunikationsstrang A, Kommunikationsthema T1 _{"}Rücksetz-Signal"). Alle anderen Befehle sollen verworfen werden (Kommunikationsstrang A Kommunikationsthema T2 "Brückung". Messwerte sollen nach wie vor von der Steuerung (Komponente 2) zur Mensch- Maschine Schnittstelle (Komponente 1) übertragen werden (Kommunikationsstrang A, Kommunikationsthema T3 "Istwerte").

### Situation 1_3 Notabschaltung:

Eine Notsituation wurde erkannt. Das System soll in einen sicheren Zustand gefahren werden. Die Übertragung der Messwerte von der Steuerung (Komponente 2) zur Mensch-Maschine-Schnittstelle (Komponente 1) soll weiter stattfinden (Kommunikationsstrang A, Kommunikationsthema T3 "Istwerte"), da dies für die Systemüberwachung notwendig ist. Die Übertragung von Reset-Befehlen von der Mensch-Maschine-Schnittstelle (Komponente 1) zu Steuerung (Komponente 2) wird unterbrochen/unterbunden (Kommunikationsstrang A, Kommunikationsthema T1 "Rücksetz-Signal"). Überbrückungen werden automatisch deaktiviert und Istwerte durch Defaultwerte ersetzt. Das Kommunikationssteuersystem 5 sendet entsprechende Kommunikation an die Steuerung (Komponente 2), (Kommunikationsstrang A, Kommunikationsthema T2 "Brückung").

### Situation 2_1 Konfiguration im Stillstand:

Die Kommunikation zwischen Mensch-Maschine-Schnittstelle (Komponente 1) und Steuerung (Komponente 2) wird unterbunden (weil nicht notwendig), (Kommunikationsstrang A, alle Kommunikationsthemen). Die Kommunikation für das Laden der Steuerung (Komponenten 2) wird auf eine bestimmte Anzahl von Ladevorgängen begrenzt (Kommunikationsstrang C, Kommunikationsthema T5 "Laden").

In einer alternativen Implementierung wird die Kommunikation für das Laden der beiden Komponenten 1 und 2 auf eine bestimmte Anzahl von Ladevorgängen begrenzt (Kommunikationsstrang B und C, Kommunikationsthema T5 "Laden"). In diesem Fall verhält sich Kommunikationsstrang B analog zu den Zuständen des Kommunikationsstrangs C aus Figur 9 (siehe Erläuterungen unten). Insbesondere wird dabei die Beeinflussung 32 in Figur 9 auch auf Kommunikationsstrang B, Kommunikationsthema T5 angewandt.

### Situation 2_2 Konfiguration im laufenden Betrieb:

Alle Kommunikationsthemen in allen Kommunikationssträngen sind erlaubt. Das Laden der Steuerung (Komponente 2), (Kommunikationsstrang C, Kommunikationsthema T5 "Laden") muss innerhalb eines vordefinierten Zeitraumes erfolgen. Die Anzahl der Ladeversuche und die Menge an Daten, die übertragen werden kann, sind begrenzt. Bei Überschreitung von Zeit, Menge oder Ladevorgängen wird diese Kommunikation unterbunden.

In einer alternativen Implementierung muss das Laden beider Komponenten 1 und 2, (Kommunikationsstrang B und C, Kommunikationsthema T5 "Laden") innerhalb eines vordefinierten Zeitraumes erfolgen. In diesem Fall verhält sich Kommunikationsstrang B analog zu den Zuständen des Kommunikationsstrangs C aus Figur 9 (siehe Erläuterungen unten). Insbesondere werden dabei die Beeinflussungen 33 und/oder 34 in Figur 9 auch auf Kommunikationsstrang B, Kommunikationsthema T5 angewandt.

Alternativ zu einem zentral in Figur 8 eingerichteten Kommunikationssteuersystem 5 (in Figur 8 nicht dargestellt) sind ein oder mehrere Kommunikationssteuersysteme vorgesehen, die jeweils dezentral in einer oder mehreren der Komponenten 1, 2, 3 intern implementiert sind. Die Kommunikation der Komponenten 1, 2, 3 entlang der jeweiligen Kommunikationsstränge A, B, C im Kommunikationsnetzwerk 4 wird, wie oben erläutert, beeinflusst, wobei die Beeinflussung jeweils von dem oder den entsprechenden Kommunikationssteuersystemen innerhalb der Komponenten 1, 2, 3 vorgenommen wird.

Die Übersicht in Figur 9 fasst die verschiedenen, vorstehend zu Figur 8 erläuterten Kommunikationsszenarien nochmals zusammen, wobei die verschiedenen Kommunikationsszenarien 1_1, 1_2, 1_3, 2_1, 2_2 mit den jeweils gesteuerten Kommunikationsthemen T1 bis T5 für jeden Kommunikationsstrang A, B, C (siehe Figur 8 und obige Erläuterungen) aufgeführt sind. Die Bezugszeichen 29 bis 34 bezeichnen die verschiedenen Beeinflussungen der Kommunikation. Dabei bezeichnet die Beeinflussung 29 eine zugelassene Kommunikation, die Beeinflussung 30 eine abgelehnte/blockierte Kommunikation, die Beeinflussung 31 eine erzwungene/initiierte Kommunikation (z. B. sendet Kommunikationssteuersystem 5 bestimmte Kommunikations(steuer-)signale, z.B. Signal: "Brückung Rücksetzen", an eine oder mehrere Komponenten 1, 2, 3), die Beeinflussung 32 eine auf eine bestimmte Anzahl beschränkte Kommunikation, die Beeinflussung 33 eine auf eine bestimmte Zeitdauer beschränkte Kommunikation, sowie die Beeinflussung 34 eine auf eine bestimmte Tageszeit beschränkte Kommunikation.

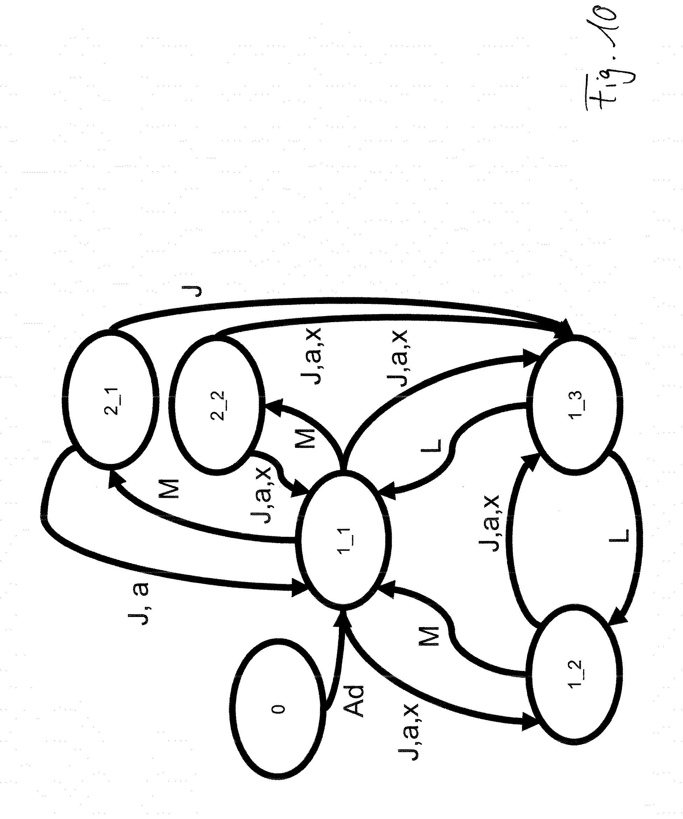

Figur 10 zeigt ein schematisiertes Steuerdiagramm zur Steuerung von beispielhaften Kommunikationsszenarien gemäß Figur 9 und einer entsprechenden beispielhaften Kommunikationssteuerung, die durch ein Kommunikationssteuersystem 5 der oben erläuterten Art vorgegeben wird. Der Übergang von Kommunikationsszenario zu Kommunikationsszenario kann auf verschiedene Arten initiiert werden. Entweder ausgelöst von einer externen Bedingung x (z. B. Signal "Überdruck im Kessel") und/oder einer anderen, ggf. übergeordneten, Kommunikationssteuerung oder/und ausgelöst von einer internen Automatik a (z. B. zulässige Zeit in einem Kommunikationsszenario überschritten, zulässige Tageszeit in einem Kommunikationsszenario verlassen, Datenmengenüberschreitung innerhalb des Kommunikationsnetzwerkes 4, Erkennung eines definierten Kommunikationsmusters in den Nutzdaten) und/oder durch eine vom Kommunikationssteuersystem 5 erfasste/erkannte Benutzereingabe (z. B. Betätigen einer Schalteinrichtung, Not-Aus-Schalter, usw.). Ein Benutzer kann in dieser Konfiguration zum Beispiel jedermann J, ein Administrator Ad, ein Betriebsleiter L oder ein Betriebsmeister M sein. In einer solchen Implementierung können auch in das Kommunikationssteuersystem 5 eingehende Signale als eintretende Ereignisse bzw. Bedingungen herangezogen werden.

In einem beispielhaften System, dessen Kommunikation durch das Kommunikationssteuersystem 5 gesteuert werden soll, ist gemäß Figur 10 das Kommunikationsszenario 0 ein definierter Initialzustand. Von diesem Initialzustand aus kann zum Beispiel ausgelöst über einen Administrator/Administrationsbefehl Ad in das Kommunikationsszenario 1_1 gewechselt werden. Das Kommunikationsszenario 1_1 beschreibt einen "Normal- und Diagnosebetrieb" und stellt somit quasi den Normalzustand dar (d.h. z. B. den Zustand, welcher über den Lebenszyklus hinweg zeitlich am längsten gültig sein wird). Das Kommunikationssteuersystem 5 wertet externe Bedingungen x und interne Bedingungen a aus und treibt die Kommunikation im Gefahrenfall oder Notfall in ein entsprechend anderes Kommunikationsszenario, zum Beispiel in Kommunikationsszenario 1_2 oder 1_3. Auch durch erkannte Benutzereingaben (jedermann J) können diese Kommunikationsszenarien angesteuert werden. Löst sich eine Gefahren- bzw. Notsituation wieder auf, wird - je nach Gefahrensituation durch erkannte (autorisierte) Bedieneingaben des Betriebsmeisters M (Kommunikationsszenario 1_2) oder des Betriebsleiters L (Kommunikationsszenario 1_3) - wieder in das Kommunikationsszenario 1_1 zurückgeschaltet. In diversen Implementierungen ist eine Voraussetzung dafür, dass interne Bedingungen a und/oder externe Bedingungen x dies nicht verhindern (Bedienhandlungen können in Abhängigkeit von internen Bedingungen a oder externen Bedingungen x erlaubt oder verboten werden). Gemäß der Konfiguration in Figur 10 kann vom Kommunikationsszenario 1_2 über eine erkannte interne Bedingung a oder eine erkannte externe Bedingung x oder eine erkannte Bedieneingabe eines jeden Benutzers J in das Kommunikationsszenario 1_3 gewechselt werden. Ein Wechsel vom Kommunikationsszenario 1_3 in das Kommunikationsszenario 1_2 ist jedoch beispielhaft nur durch eine erkannte Bedieneingabe eines Betriebsleiters L möglich.

Der Übergang in einen Konfigurationsbetrieb (Kommunikationsszenarien 2_1 und 2_2) kann durch den Betriebsmeister M eingeleitet werden. Der Konfigurationsbetrieb (beide Kommunikationsszenarien 2_1 und 2_2) ist durch interne Bedingungen a auf eine Zeitdauer, eine Tageszeit und/oder eine zulässige Datenmenge (Datenvolumen pro Kommunikationsteilnehmer/Komponente) beschränkt. Das Kommunikationsszenario 2_2 ist zusätzlich durch externe Bedingungen x beschränkt. Bei Überschreitung/Eintreten dieser Bedingungen oder gegebenenfalls veranlasst durch eine erkannte Bedieneingabe eines Benutzers J steuert das Kommunikationssteuersystem 5 eine Kommunikation automatisch wieder in das Kommunikationsszenario 1_1 oder in ein anderes Kommunikationsszenario.

Es sei angemerkt, dass Figur 10 verschiedene Kommunikationsszenarien veranschaulicht, anhand derer eine Kommunikation bzw. deren Kommunikationsinhalt zwischen Komponenten innerhalb eines Kommunikationsnetzwerkes 4 über ein Kommunikationssteuersystem 5 verändert, modifiziert, beeinflusst, erweitert oder eingeschränkt wird. Die Kommunikationsszenarien entsprechen dabei nicht zwangsläufig verschiedenen Zuständen der Komponenten. Das bedeutet beispielsweise, dass das Kommunikationssteuersystem 5 nicht unmittelbar eine Zustandssteuerung der Komponenten durchführt, sondern situationsabhängig Art, Umfang, Inhalt, usw. der Kommunikation zwischen den Komponenten beeinflusst/steuert. Das bedeutet zum Beispiel, dass situationsabhängig ein Notfall eintreten kann, ohne dass ein oder mehrere Zustände von Komponenten verändert werden, zum Beispiel durch eine äußere Situation außerhalb eines Systems oder einer Anlage. Diesen Notfall kann das Kommunikationssteuersystem 5 anhand erfasster Eingangssignale (siehe obige Erläuterungen) erkennen und entsprechend eine Kommunikation, wie oben erläutert, vom Kommunikationsszenario 1_1 in das Kommunikationsszenario 1_2 oder 1_3 ändern. In anderen Beispielen wird über das Kommunikationssteuersystem 5 unmittelbar die Kommunikation der beteiligten Komponenten beeinflusst, was im Ergebnis Einfluss auf deren Betriebszustände oder Betriebsmodi hat.

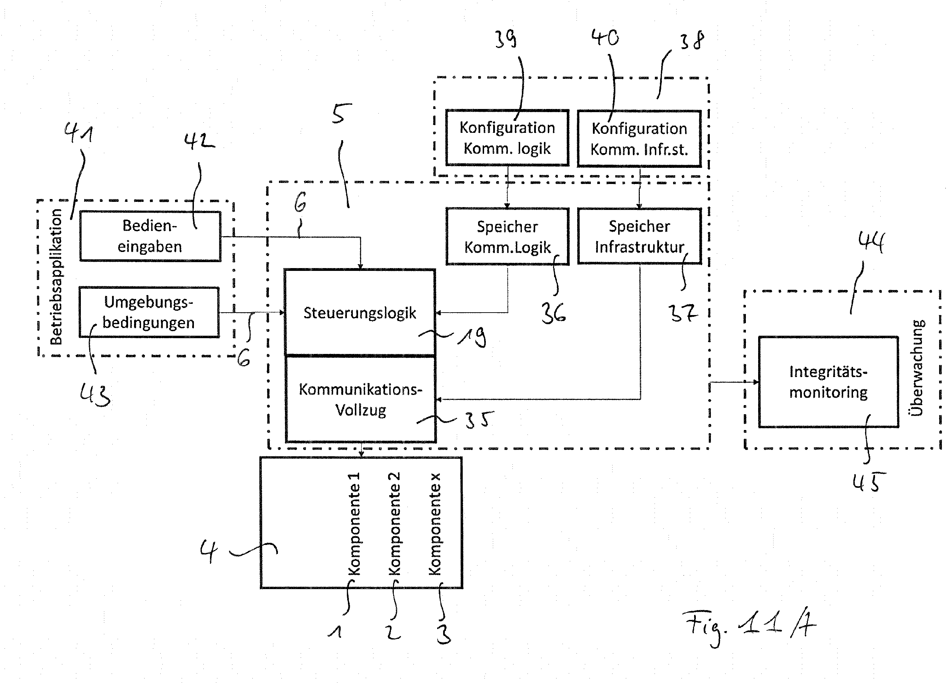

Figur 11A zeigt eine schematisierte Darstellung einer beispielhaften Konfiguration von Instanzen eines Gesamtsystems mit zentral integriertem Kommunikationssteuersystem 5. Das Kommunikationssteuersystem 5 ist hier als eingebettetes System konfiguriert und umfasst eine Steuerungslogik 19 (z. B. einen Mikroprozessor) und ein Kommunikationsvollzugsmodul 35 (z. B. ein FPGA). Daneben umfasst das Kommunikationssteuersystem 5 einen Speicher 36 zum Speichern einer Kommunikationslogik und einen Speicher 37 zum Speichern von Netzwerkparametern oder Kommunikationsparametern der Kommunikationsinfrastruktur bzw. des Kommunikationsnetzwerkes 4.

Die Steuerungslogik 19 ermittelt die notwendige bzw. erlaubte oder die zu erzwingende Kommunikation bzw. Kommunikationsthemen in Abhängigkeit von einem Kommunikationsszenario zwischen den Komponenten in Abhängigkeit von der vorliegenden Situation (externe/interne Bedingungen, Umgebungsbedingungen) und den Bedieneingaben gemäß einer vorkonfigurierten Kommunikationslogik, die im Speicher 36 hinterlegt ist. Signale zur Auswertung der vorliegenden Situation werden der Steuerungslogik 19 gemäß der Konfiguration in Figur 11A über eine Betriebsapplikation 41 übergeben. Die Betriebsapplikation 41 umfasst eine Eingabenerfassung 42 und eine Bedingungserfassung 43, die eingerichtet sind, Bedieneingaben bzw. externe/interne Bedingungen oder Umgebungsbedingungen zu erfassen. Die Module 42 und 43 können entsprechende Signale als Bedingung 6 an die Steuerungslogik 19 des Kommunikationssteuersystems 5 übergeben.

Die Kommunikationslogik mit den zugehörigen Kommunikationsszenarien bzw. Kommunikationsregeln oder Kommunikationsthemen wird in einer Konfigurationsapplikation 38 konfiguriert und in den Speicher 36 geladen. Hierfür stellt die Konfigurationsapplikation 38 ein Modul 39 bereit. Die Kommunikationsinfrastruktur oder Netzwerkinfrastruktur (Netzwerk-Parameter oder Kommunikationsparameter) wird ebenfalls in der Konfigurationsapplikation 38 konfiguriert und in den Speicher 37 geladen. Hierfür stellt die Konfigurationsapplikation 38 ein vom Modul 39 separates Modul 40 bereit.

Aufgrund der separierten Einrichtung der Module 39, 36, 19 von 40, 37, 35 kann die Konfiguration der Kommunikationslogik abstrahiert bzw. getrennt (z. B. durch andere Benutzerrollen) von der Konfiguration der Kommunikationsinfrastruktur vorgenommen werden. Ein Austausch von Komponenten erfordert somit vorteilhaft keine Änderung der Kommunikationslogik (Kommunikationsszenarien).

Das Kommunikationsvollzugsmodul 35 setzt das in der Steuerungslogik 19 anhand der im Speicher 36 hinterlegten Kommunikationslogik ermittelte Kommunikationsszenario auf die diversen Komponenten (beispielhaft in Figur 11A die Komponenten 1, 2 und 3) innerhalb des Kommunikationsnetzwerkes 4 um und steuert/beeinflusst deren Kommunikation unter Berücksichtigung von aus dem Speicher 37 ermittelten Netzwerkparametern oder Kommunikationsparametern. Das Kommunikationsvollzugsmodul 35 führt in der Konfiguration gemäß Figur 11A insbesondere folgende Aktionen durch:
a) Erzwingen / Erschaffen / Initiieren notwendiger Kommunikation vom Kommunikationssteuersystem 5 an eine oder mehrere Komponenten 1, 2, 3, x (z. B. Alarmsignal oder allgemein Kommunikationssteuersignal);
b) Modifikation stattfindender (bestehender) Kommunikation (z. B. Ersatzwert oder Einschränkung auf bestimmte Kommunikationsprotokolle, Datentypen, Daten, Signale, Information, Verbindungstypen, Verbindungsrichtungen, Kommunikationspartner, Kommunikationsrichtung, Kommunikationsumfang oder Kommunikationsinhalt);
c) Verwerfen nicht erwünschter bzw. nicht erlaubter Kommunikation (z. B. Sperren bestimmter Kommunikationsprotokolle, Datentypen, Daten, Signale, Information, Verbindungstypen, Verbindungsrichtungen, Kommunikationspartner, Kommunikationsrichtung, Kommunikationsumfang oder Kommunikationsinhalt).

Nutzdatenstrom, Steuerdaten oder sonstige Informationen des Kommunikationssteuersystems 5 werden beispielsweise an eine Überwachung 44 mit einem Integritätsmonitoring 45 übergeben. Die Überwachung 44 bzw. das Integritätsmonitoring 45 überwachen beispielsweise Zustände der Komponenten 1, 2, 3, x oder des gesamten Kommunikationsnetzwerkes 4 oder sonstiger Instanzen eines Systems oder einer Anlage (siehe obige Erläuterungen), in dem das Kommunikationsnetzwerk 4 implementiert ist.

In der Konfiguration gemäß Figur 11A arbeitet das Kommunikationssteuersystem 5 somit quasi als dynamische "Kommunikations-Firewall", die in Abhängigkeit von bestimmten Situationen (externe/interne Bedingungen, Umgebungsbedingungen, Bedieneingaben) eine Kommunikation innerhalb des Kommunikationsnetzwerkes 4 modifiziert und beeinflusst.

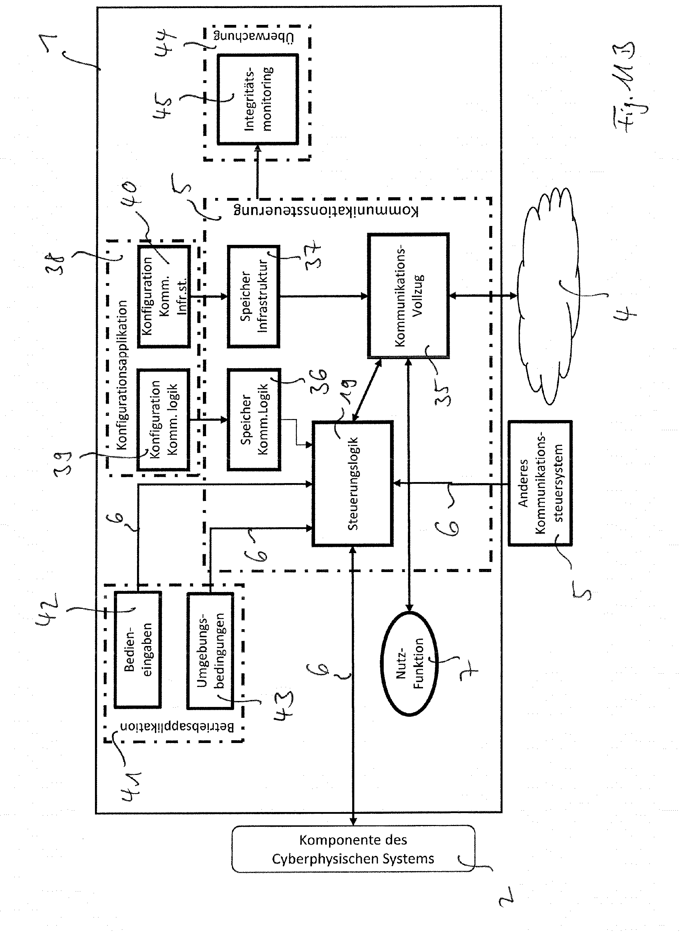

Figur 11B zeigt eine schematisierte Darstellung einer beispielhaften Konfiguration von Instanzen einer Komponente bzw. eines Gerätes 1 mit integriertem Kommunikationssteuersystem 5, wobei das Gerät 1 an ein Gesamtsystem angebunden ist. Das Gesamtsystem ist beispielsweise ein cyber-physisches System.

Im Wesentlichen entsprechen die Funktionalitäten der internen Instanzen im Gerät 1 den oben zur Implementierung in Figur 11A erläuterten Funktionalitäten. Im Unterschied zur Implementierung in Figur 11A ist das Kommunikationssteuersystem 5 gemäß Figur 11B jedoch dezentral und Geräte-intern im Gerät 1 eingerichtet und nicht zentral separat von Komponenten bzw. Geräten 1, 2, 3 in Figur 11A.

Die Steuerungslogik 19 ist in Figur 11B zusätzlich an eine weitere Komponente 2 des Gesamtsystems bzw. an ein anderes Kommunikationssteuersystem 5 (vgl. z.B. Figur 7) angebunden und kann neben Signalen aus der Betriebsapplikation 41 auch von der Komponente 2 bzw. dem anderen Kommunikationssteuersystem 5 Signalisierungen einer Bedingung 6 zur Beeinflussung der Kommunikation des Gerätes 1 empfangen. Diese Merkmale sind beispielsweise auch in einer die Konfiguration gemäß Figur 11A weiterbildenden Implementierung eingerichtet.

Gemäß Figur 11B ist der Kommunikationsvollzug 35 zwischen eine Gerätenutzfunktion 7 und das Kommunikationsnetzwerk 4 geschaltet, wobei der Kommunikationsvollzug 35 über die Steuerungslogik 19 kontrolliert wird. Der Kommunikationsvollzug 35 vollzieht die über die Steuerungslogik 19 angewiesene Beeinflussung der Kommunikationsinhalte aus der Gerätenutzfunktion 7 in das Kommunikationsnetzwerk 4 und/oder umgekehrt (vgl. z.B. Figuren 4A bis 4H, 5 und 6).

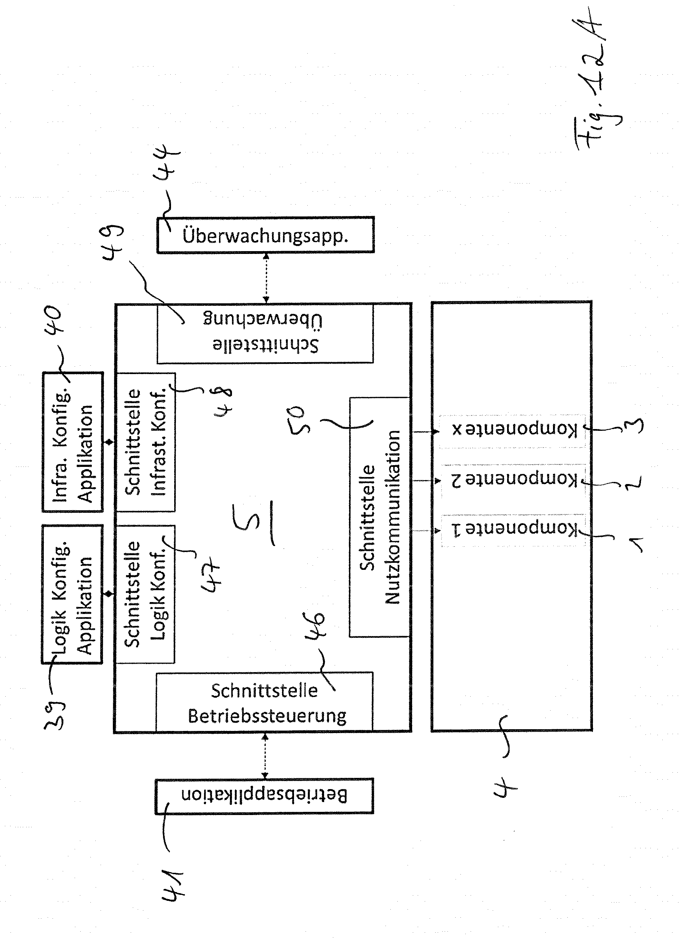

Figur 12A zeigt eine schematisierte Darstellung einer beispielhaften Konfiguration von Schnittstellen der Konfiguration gemäß Figur 11A. Die Schnittstelle Nutzkommunikation 50 gemäß Figur 12A ist mit den Komponenten 1, 2, 3 verbunden (drahtgebunden/nicht drahtgebunden, Ethernet, andere Kommunikationsarten). Die Verbindung zwischen Schnittstelle Nutzkommunikation 50 und den Komponente 1, 2, 3 kann durch Authentifizierungsmechanismen (z.B. MacSec) geschützt sein. Wenn die Komponente nicht selbst in der Lage ist einen Authentifizierungsprozess durchzuführen, kann der Komponente eine Authentifizierung 51, z. B. ein separates Authentifizierungsmodul oder ein so genannter "Authentifizierungssatellit", vorgeschaltet werden. So kann zum Beispiel ein ansprechen von Komponenten über verschiedene Räume, räumliche Bereiche, Areale oder Gebäude 52 und 53 hinweg erfolgen.

Die Schnittstelle Betriebssteuerung 46 gemäß Figur 12A ist mit der Betriebsapplikation 41 verbunden (drahtgebunden/nicht drahtgebunden, Ethernet, andere Kommunikationsarten). Die Betriebsapplikation 41 versorgt das Kommunikationssteuersystem 5 mit aktuellen Umgebungsbedingungen, Bediensignalen, usw. und bildet die Bedienschnittstelle für den operativen Bediener. Der operative Bediener (Operator) ist für den Betrieb des Systems oder der Anlage zuständig, in der das Kommunikationssteuersystem 5 eingerichtet ist, und kann auf die Kommunikationssteuerung durch Steuerbefehle Einfluss nehmen (z.B. Fahrer, Pilot, Anlagenfahrer, Hausmeister, Laborant, etc.).

Die Schnittstelle Logik Konfiguration 47 ist mit dem Modul 39 der Konfigurationsapplikation 38 (siehe Figur 11A) verbunden (drahtgebunden/nicht drahtgebunden, Ethernet, andere Kommunikationsarten). Über die Konfigurationsapplikation 38 wird das Kommunikationssteuersystem 5, insbesondere die Steuerungslogik 19 in Verbindung mit dem Speicher 36 gemäß Figur 11A, programmiert.

Die Schnittstelle Infrastruktur Konfiguration 48 ist mit dem Modul 40 der Konfigurationsapplikation 38 (siehe Figur 11A) verbunden (drahtgebunden/nicht drahtgebunden, Ethernet, andere Kommunikationsarten). Über die Konfigurationsapplikation 38 wird das Kommunikationssteuersystem 5, z.B. das Kommunikationsvollzugsmodul 35 in Verbindung mit dem Speicher 37 gemäß Figur 11A, programmiert.

Die Schnittstelle Überwachung 49 ist mit der Überwachungsapplikation 44 verbunden (drahtgebunden/nicht drahtgebunden, Ethernet, andere Kommunikationsarten). Über die Überwachungsapplikation 44 wird ein übergeordnetes Überwachungssystem mit Informationen über die Kommunikationsinfrastruktur (Teile des oder das gesamte Kommunikationsnetzwerk 4) und den Datenverkehr darin versorgt. Die Überwachungsapplikation 44 versorgt z.B. Systeme zur Datenstromanalyse und/oder Netzwerküberwachungsapplikationen.

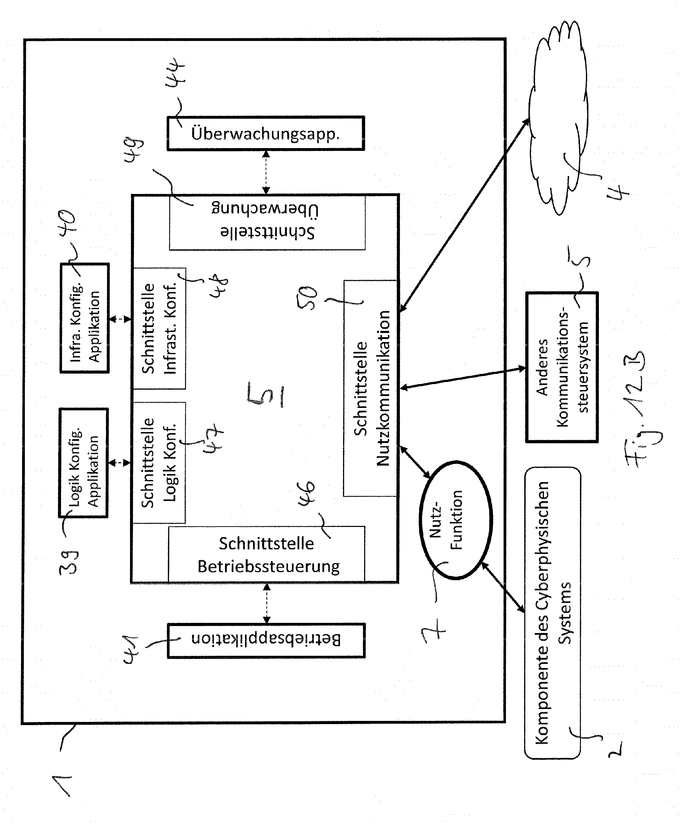

Figur 12B zeigt eine schematisierte Darstellung einer beispielhaften Konfiguration von Schnittstellen der Konfiguration eines Gerätes 1 gemäß Figur 11B. Im Wesentlichen entsprechen die Funktionalitäten der nun Geräte-internen Schnittstellen im Gerät 1 den oben zur Implementierung in Figur 12A erläuterten Funktionalitäten. Im Unterschied zur Implementierung in Figur 12A sind die Schnittstellen dezentral und Geräte-intern im Gerät 1 eingerichtet und nicht zentral separat von Komponenten bzw. Geräten 1, 2, 3 in Figur 12A. Über die Geräte-interne Schnittstelle Nutzkommunikation 50 sind die Gerätenutzfunktion 7 und mittelbar darüber die weitere Komponente 2 des cyber-physischen Systems sowie das Kommunikationsnetzwerk 4 und das andere Kommunikationssteuersystem 5 angebunden.

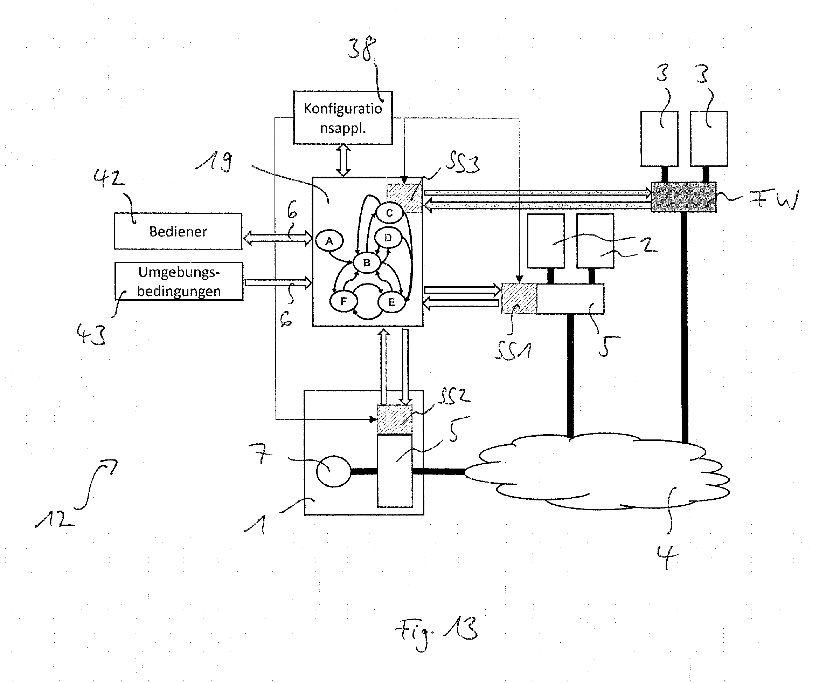

Figur 13 zeigt eine schematisierte Darstellung einer beispielhaften Konfiguration einer weiteren Ausführungsform eines gesamten Systems 12. Das System 12 ist beispielsweise ein cyber-physisches System. Die Implementierung gemäß Figur 13 veranschaulicht eine Kombination von zentralen und dezentralen Implementierungen von Kommunikationssteuersystemen 5 im gesamten System 12. Eine zentral implementierte Steuerungslogik 19 (vgl. Figur 11A) wird von einer Eingabenerfassung 42 und von einer Bedingungserfassung 43 entsprechend angesteuert, wobei Bedingungen 6 signalisiert werden. Eine Konfigurationsapplikation 38 dient zur Konfiguration der jeweiligen Kommunikationssteuersysteme 5 bzw. von deren Schnittstellen SS1, SS2 und SS3 und zur Konfiguration der Steuerungslogik 19. Die im System 12 verteilten Geräte 1, 2 und 3 sind über ein Kommunikationsnetzwerk 4 verbunden.

Ein zentral implementiertes Kommunikationssteuersystem 5 beeinflusst Kommunikationsinhalte von Komponenten 2 aus dem bzw. in das Kommunikationsnetzwerk 4 (vgl. z.B. Figuren 1, 2A bis 2C) und tauscht über dessen Schnittstelle SS1 mit der Steuerungslogik 19 Signale/Befehle aus. Ein dezentral im Gerät 1 implementiertes weiteres Kommunikationssteuersystem 5 beeinflusst Kommunikationsinhalte einer internen Gerätenutzfunktion 7 des Gerätes 1 aus dem bzw. in das Kommunikationsnetzwerk 4 (vgl. z.B. Figuren 3, 4A bis 4H) und tauscht über dessen Schnittstelle SS2 mit der Steuerungslogik 19 Signale/Befehle aus. Des Weiteren sind sonstige Komponenten 3 über eine konventionelle Firewall FW an das Kommunikationsnetzwerk 4 angebunden. Die Firewall FW tauscht mit der Steuerungslogik 19 über deren Schnittstelle SS3 Signale/Befehle aus, wobei SS3 die ausgewählten Kommunikationsszenarien derart in Befehle/Signale transformiert, dass die Firewall FW die Kommunikation entsprechend der Vorgabe durch die Kommunikationsszenarien beeinflusst.

In weiteren Anwendungsbeispielen ist ein in der Kommunikation zu steuerndes System ein Flugzeug, wobei zum Beispiel zwischen Kommunikationsszenarien Wartungsbetrieb versus Flugbetrieb und/oder zwischen Umgebungsbedingungen Schneesturm versus Schönwetter unterschieden wird, wobei ein das Flugzeug steuernder Pilot vermittels des Kommunikationssteuersystems 5 auf eine Kommunikation Einfluss nehmen kann.

In weiteren Anwendungsbeispielen ist ein in der Kommunikation zu steuerndes System ein Gebäude oder Gebäudesystem, wobei zum Beispiel zwischen Kommunikationsszenarien Gebäude im Errichtungsstadium versus Betriebsstadium und/oder zwischen Umgebungsbedingungen Gebäude in Brand versus Normalbetrieb unterschieden wird.

Allgemein kann es in allen hier beschriebenen Anwendungsbeispielen aus Gründen der Sicherheit sinnvoll sein, die Kommunikation durch das Kommunikationssteuersystem 5 auf die in der Situation notwendige Kommunikation zu reduzieren bzw. in Gefahrsituationen notwendige Kommunikation zu erzwingen.

In nicht dargestellten Anwendungsbeispielen bzw. Ausführungsformen und Implementierungen wird durch die Trennung von Kommunikationslogik und Kommunikationsinfrastruktur bzw. Netzwerkinfrastruktur die Kommunikationslogik auf verschiedene Teilsysteme oder Untersysteme propagiert. Das Kommunikationssteuersystem 5 kann auf diese Weise verschiedene Teilsysteme oder Untersysteme aufweisen, wobei die Kommunikationslogik über diese mehreren Teilsysteme oder Untersysteme hinweg verteilt wird. Über Betriebsapplikationen 41 können mehrere Kommunikationssteuersysteme 5 auch kaskadiert werden. Auf diese Weise können zum Beispiel Bedieneingaben oder allgemein Wechsel der Kommunikationsszenarien auf hierarchisch untergeordnete Kommunikationssteuersysteme 5 kaskadiert werden.

Die hier beschriebenen Ausführungsformen und Implementierungen umfassen lediglich Beispiele einer Vielzahl möglicher Ausführungsformen und Implementierungen der Erfindung.

### Bezugszeichenliste

- 0, 1, 2, 3: Komponente, Gerät
- 4: Kommunikationsnetzwerk
- 5: Kommunikationssteuersystem
- 6: Bedingung
- 7: Gerätenutzfunktion
- 8: Geräte-interne Kommunikation
- 9: Netzwerk-Kommunikation
- 10: hinzugefügte Kommunikation
- 11: hinzugefügte Kommunikation
- 12: System
- 13: Modul Bedienung
- 14: Modul Bedienung
- 15: Modul Konfiguration
- 16: Modul Konfiguration
- 17: Modul Konfiguration
- 19: Steuerungslogik
- 29: Kommunikation zugelassen
- 30: Kommunikation abgelehnt
- 31: Kommunikation erzwungen
- 32: Anzahl beschränkt
- 33: Zeitdauer beschränkt
- 34: zu bestimmtem Zeitpunkt/Tageszeit erlaubt
- 35: Kommunikationsvollzugsmodul
- 36: Speicher Kommunikationslogik
- 37: Speicher Infrastruktur
- 38: Konfigurationsapplikation
- 39: Modul Konfiguration Kommunikationslogik
- 40: Modul Konfiguration Kommunikationsinfrastruktur
- 41: Betriebsapplikation
- 42: Eingabenerfassung
- 43: Bedingungserfassung
- 44: Überwachung
- 45: Monitoring
- 46: Schnittstelle Betriebssteuerung
- 47: Schnittstelle Logik Konfiguration
- 48: Schnittstelle Infrastruktur Konfiguration
- 49: Schnittstelle Überwachung
- 50: Schnittstelle Nutzkommunikation
- 0: Kommunikationsszenario
- 1_1: Kommunikationsszenario
- 1_2: Kommunikationsszenario
- 1_3: Kommunikationsszenario
- 2_1: Kommunikationsszenario
- 2_2: Kommunikationsszenario
- x: externe Bedingung
- a: interne Automatik
- J: jedermann
- M: Betriebsmeister
- L: Betriebsleiter
- Ad: Administrator
- A, B, C: Kommunikationsstränge
- FW: Firewall
- SS1...SS3: Schnittstelle
- T1...T9: Kommunikationsthemen

## Patentansprüche

1. Verfahren zur situationsabhängigen Beeinflussung von Kommunikation wenigstens einer Komponente (1, 2, 3) innerhalb eines Kommunikationsnetzwerkes (4),
wobei eine Kommunikation der Komponente (1, 2, 3) innerhalb des Kommunikationsnetzwerkes (4) über ein Kommunikationssteuersystem (5) geleitet wird,
wobei das Kommunikationssteuersystem (5) mehrere Kommunikationsszenarien (0,1_1,...,2_2) unterscheidet und situationsabhängig eines der Kommunikationsszenarien (0,1_1,...,2_2) auswählt,
wobei die Kommunikation der Komponente (1, 2, 3) in Abhängigkeit von dem jeweils ausgewählten Kommunikationsszenario (0,1_1,...,2_2) derart beeinflusst wird, dass ein Kommunikationsinhalt durch das Kommunikationssteuersystem (5) situationsabhängig verändert oder komplett ersetzt wird,
wobei das Kommunikationssteuersystem (5) ein Eintreten einer situationsabhängigen Bedingung (6) überwacht,
wobei sich die situationsabhängige Bedingung (6) von Netzwerkparametern der Komponente (1, 2, 3) und/oder Kommunikationsparametern der Komponente (1, 2, 3) und/oder einem Nutzdatenverkehr der Komponente (1, 2, 3) innerhalb des Kommunikationsnetzwerkes (4) unterscheidet und wobei das Eintreten der situationsabhängigen Bedingung (6) eines oder mehrere der folgenden Ereignisse umfasst: ein Eintreten einer externen Bedingung (x) oder einer Änderung einer externen Bedingung (x) außerhalb des Kommunikationsnetzwerkes (4), eine Zustandsänderung der Komponente (1, 2, 3) innerhalb des Kommunikationsnetzwerkes (4), eine Überschreitung einer vorgegebenen Tageszeit, eine Überschreitung einer vorgegebenen Zeitdauer des Vorliegens eines ausgewählten Kommunikationsszenarios (0,1_1,...,2_2), eine Überschreitung eines vorgegebenen Zeitpunkts, eine Betätigung einer Schalteinrichtung, die sich von einem Aktivieren oder Deaktivieren des Kommunikationssteuersystems (5) unterscheidet, und ein Signal eines anderen Kommunikationssteuersystems (5),
wobei das Kommunikationssteuersystem (5) einen Wechsel von einem ausgewählten Kommunikationsszenario (0,1_1,...,2_2) auf ein anderes Kommunikationsszenario (0,1_1,...,2_2) vornimmt, wenn die situationsabhängige Bedingung (6) eintritt, und
wobei der Kommunikationsinhalt in verschiedene Kommunikationsthemen (T1, T2, T3,...) gegliedert wird und jedes Kommunikationsthema (T1, T2, T3,...) für sich in Abhängigkeit von dem jeweils ausgewählten Kommunikationsszenario (0,1_1,...,2_2) beeinflusst wird, wobei die verschiedenen Kommunikationsthemen (T1, T2, T3, ...) jeweils einen Teilbereich der Kommunikation der wenigstens einen Komponente darstellen und wobei Kommunikationsthemen (T1, T2, T3, ...) jeweils eine individuelle Kommunikation einer bestimmten Software-Anwendung in der wenigstens einen Komponente betreffen und/oder Kommunikationsthemen (T1, T2, T3, ...) anhand einer abstrakten Grammatik oder Hochsprache gegliedert sind.

2. Verfahren nach Anspruch 1, wobei eine Konfiguration der Kommunikationsszenarien (0,1_1,...,2_2) unabhängig und/oder getrennt von einer Konfiguration von Netzwerkparametern der Komponente (1, 2, 3) und/oder Kommunikationsparametern der Komponente (1, 2, 3) ist.

3. Verfahren nach einem der Ansprüche 1 oder 2, wobei eine Selbstdiagnose des Kommunikationssteuersystems (5) durchgeführt wird und ein Wechsel von einem ausgewählten Kommunikationsszenario (0,1_1,...,2_2) auf ein speziell vorgegebenes Sicherheits-Kommunikationsszenario vorgenommen wird, wenn die Selbstdiagnose des Kommunikationssteuersystems (5) einen Fehlerfall oder einen Risikofall des Kommunikationssteuersystems (5) ergibt.

4. Verfahren nach einem der Ansprüche 1 bis 3, wobei das Kommunikationsnetzwerk (4) innerhalb eines cyber-physischen Systems (9) implementiert ist und ein Automatisierungssystem (8) Prozesssignale des cyber-physischen Systems (9) erzeugt, wobei die Prozesssignale Gefährdungsparameter und/oder Zustandsparameter des cyber-physischen Systems (9) umfassen, wobei die Prozesssignale an das Kommunikationssteuersystem (5) übergeben werden, und
wobei das Kommunikationssteuersystem (5) das Eintreten der situationsabhängigen Bedingung (6) anhand der Prozesssignale überwacht.

5. Verfahren nach Anspruch 4, wobei ein Risikobewertungssystem (13) eine betriebliche und/oder überbetriebliche Risikobewertung des cyber-physischen Systems (9) durchführt und eine Gefährdungsstufe ermittelt,
wobei die ermittelte Gefährdungsstufe an das Kommunikationssteuersystem (5) übergeben wird, und
wobei das Kommunikationssteuersystem (5) das Eintreten der situationsabhängigen Bedingung (6) anhand der ermittelten Gefährdungsstufe überwacht.

6. Kommunikationssteuersystem (5) zur situationsabhängigen Beeinflussung von Kommunikation wenigstens einer Komponente (1, 2, 3) innerhalb eines Kommunikationsnetzwerkes (4),
wobei das Kommunikationssteuersystem (5) mehrere Kommunikationsszenarien (0,1_1,...,2_2) unterscheidet, die situationsabhängig auswählbar sind oder ausgewählt werden, wobei das Kommunikationssteuersystem (5) eingerichtet ist die Kommunikation der Komponente (1, 2, 3) in Abhängigkeit von dem jeweils ausgewählten Kommunikationsszenario (0,1_1,...,2_2) derart zu beeinflussen, dass ein Kommunikationsinhalt durch das Kommunikationssteuersystem (5) situationsabhängig verändert oder komplett ersetzt wird,
wobei das Kommunikationssteuersystem (5) eingerichtet ist ein Eintreten einer situationsabhängigen Bedingung (6) zu überwachen, wobei das Eintreten der situationsabhängigen Bedingung (6) eines oder mehrere der folgenden Ereignisse umfasst: ein Eintreten einer externen Bedingung (x) oder einer Änderung einer externen Bedingung (x) außerhalb des Kommunikationsnetzwerkes (4), eine Zustandsänderung der Komponente (1, 2, 3) innerhalb des Kommunikationsnetzwerkes (4), eine Überschreitung einer vorgegebenen Tageszeit, eine Überschreitung einer vorgegebenen Zeitdauer des Vorliegens eines ausgewählten Kommunikationsszenarios (0,1_1,...,2_2), eine Überschreitung eines vorgegebenen Zeitpunkts, eine Betätigung einer Schalteinrichtung, die sich von einem Aktivieren oder Deaktivieren des Kommunikationssteuersystems (5) unterscheidet, und ein Signal eines anderen Kommunikationssteuersystems (5),
wobei sich die situationsabhängige Bedingung (6) von Netzwerkparametern der Komponente (1, 2, 3) und/oder Kommunikationsparametern der Komponente (1, 2, 3) und/oder einem Nutzdatenverkehr der Komponente (1, 2, 3) innerhalb des Kommunikationsnetzwerkes (4) unterscheidet,
wobei das Kommunikationssteuersystem (5) eingerichtet ist einen Wechsel von einem ausgewählten Kommunikationsszenario (0,1_1,...,2_2) auf ein anderes Kommunikationsszenario (0,1_1,...,2_2) vorzunehmen, wenn die situationsabhängige Bedingung (6) eintritt; und
wobei das Kommunikationssteuersystem (5) eingerichtet ist den Kommunikationsinhalt in verschiedene Kommunikationsthemen (T1, T2, T3,...) zu gliedern und jedes Kommunikationsthema (T1, T2, T3,...) für sich in Abhängigkeit von dem jeweils ausgewählten Kommunikationsszenario (0,1_1,...,2_2) zu beeinflussen, wobei die verschiedenen Kommunikationsthemen (T1, T2, T3, ...) jeweils einen Teilbereich der Kommunikation der wenigstens einen Komponente darstellen und wobei Kommunikationsthemen (T1, T2, T3, ...) jeweils eine individuelle Kommunikation einer bestimmten Software-Anwendung in der wenigstens einen Komponente betreffen und/oder Kommunikationsthemen (T1, T2, T3, ...) anhand einer abstrakten Grammatik oder Hochsprache gegliedert sind.

7. Kommunikationssteuersystem (5) nach Anspruch 6, aufweisend eine Steuerungslogik (19) und ein Kommunikationsvollzugsmodul (35),
wobei die Steuerungslogik (19) eingerichtet ist ein auszuwählendes Kommunikationsszenario (0,1_1,...,2_2) in Abhängigkeit von der vorliegenden situationsabhängigen Bedingung (6) gemäß einer vorkonfigurierten Kommunikationslogik zu ermitteln, und
wobei das Kommunikationsvollzugsmodul (35) eingerichtet ist das in der Steuerungslogik (19) ermittelte Kommunikationsszenario (0,1_1,...,2_2) umzusetzen.

8. Kommunikationssteuersystem (5) nach einem der Ansprüche 6 oder 7, wobei eine Konfiguration der Kommunikationsszenarien (0,1_1,...,2_2) unabhängig und/oder getrennt von einer Konfiguration von Netzwerkparametern der Komponente (1, 2, 3) oder Kommunikationsparametern der Komponente (1, 2, 3) ist.

9. Kommunikationssteuersystem (5) nach einem der Ansprüche 6 bis 8, wobei das Kommunikationssteuersystem (5) eingerichtet ist eine Selbstdiagnose durchzuführen und einen Wechsel von einem ausgewählten Kommunikationsszenario (0,1_1,...,2_2) auf ein speziell vorgegebenes Sicherheits-Kommunikationsszenario vorzunehmen, wenn die Selbstdiagnose des Kommunikationssteuersystems (5) einen Fehlerfall oder einen Risikofall des Kommunikationssteuersystems (5) ergibt.

10. Kommunikationsnetzwerk (4) mit wenigstens einer Komponente (1, 2, 3), die für eine Kommunikation innerhalb des Kommunikationsnetzwerkes (4) eingerichtet ist, sowie mit einem Kommunikationssteuersystem (5) nach einem der Ansprüche 6 bis 9, wobei das Kommunikationsnetzwerk (4) und/oder die Komponente (1, 2, 3) eingerichtet sind die Kommunikation der Komponente (1, 2, 3) innerhalb des Kommunikationsnetzwerkes (4) über das Kommunikationssteuersystem (5) zu leiten.

11. Cyber-physisches System (9) mit einem Kommunikationsnetzwerk (4) nach Anspruch 10 und mit einem Automatisierungssystem (8), wobei das Automatisierungssystem (8) eingerichtet ist Prozesssignale des cyber-physischen Systems (9) zu erzeugen,
wobei die Prozesssignale Gefährdungsparameter und/oder Zustandsparameter des cyber-physischen Systems (9) umfassen, wobei das cyber-physische System (9) eingerichtet ist die Prozesssignale an das Kommunikationssteuersystem (5) zu übergeben, und
wobei das Kommunikationssteuersystem (5) eingerichtet ist das Eintreten der situationsabhängigen Bedingung (6) anhand der Prozesssignale zu überwachen.

12. Cyber-physisches System (9) nach Anspruch 11, ferner aufweisend ein Risikobewertungssystem (13), wobei das Risikobewertungssystem (13) eingerichtet ist eine betriebliche und/oder überbetriebliche Risikobewertung des cyber-physischen Systems (9) durchzuführen und eine Gefährdungsstufe zu ermitteln,
wobei das cyber-physische System (9) eingerichtet ist die ermittelte Gefährdungsstufe an das Kommunikationssteuersystem (5) zu übergeben, und
wobei das Kommunikationssteuersystem (5) eingerichtet ist das Eintreten der situationsabhängigen Bedingung (6) anhand der ermittelten Gefährdungsstufe zu überwachen.

## Claims

1. Method for situation-dependent influencing of communication of at least one component (1, 2, 3) within a communication network (4), wherein a communication of the component (1, 2, 3) within the communication network (4) is routed via a communication control system (5), wherein the communication control system (5) distinguishes a plurality of communication scenarios (0, 1_1, ..., 2_2) and selects one of the communication scenarios (0, 1_1, ..., 2_2) depending on a situation, wherein the communication of the component (1, 2, 3) is influenced as a function of the respectively selected communication scenario (0, 1_1, ..., 2_2) in such a way that a communication content is changed or completely replaced by the communication control system (5) depending on the situation, wherein the communication control system (5) monitors the occurrence of a situation-dependent condition (6), wherein the situation-dependent condition (6) differs from network parameters of the component (1, 2, 3) and/or communication parameters of the component (1, 2, 3) and/or a data traffic of the component (1, 2, 3) within the communication network (4), and wherein the occurrence of the situation-dependent condition (6) comprises one or more of the following events: an occurrence of an external condition (x) or a change of an external condition (x) outside the communication network (4), a change of state of the component (1, 2, 3) within the communication network (4), an exceeding of a predetermined time of day, an exceeding of a predetermined duration of the presence of a selected communication scenario (0, 1_1, ..., 2_2), exceeding a predetermined timepoint, actuation of a switching device other than activation or deactivation of the communication control system (5), and a signal from another communication control system (5), wherein the communication control system (5) performs switching from a selected communication scenario (0, 1_1, ..., 2_2) to another communication scenario (0, 1_1, ..., 2_2) when the situation-dependent condition (6) occurs, and wherein the communication content is divided into different communication topics (T1, T2, T3,...) and each communication topic (T1, T2, T3,...) is influenced separately as a function of the respectively selected communication scenario (0, 1_1, ..., 2_2), wherein the different communication topics (T1, T2, T3,...) each represent a sub-field of the communication of the at least one component and wherein communication topics (T1, T2, T3, ...) each relate to an individual communication of a specific software application in the at least one component and/or communication topics (T1, T2, T3, ...) are structured on the basis of an abstract grammar or high-level language.

2. The method according to claim 1, wherein a configuration of the communication scenarios (0, 1_1, ..., 2_2) is independent and/or separated from a configuration of network parameters of the component (1, 2, 3) and/or communication parameters of the component (1, 2, 3).

3. The method according to one of claims 1 or 2, wherein a self-diagnosis of the communication control system (5) is performed and a change is made from a selected communication scenario (0, 1_1, ..., 2_2) to a specially predetermined safety communication scenario if the self-diagnosis of the communication control system (5) results in a fault case or a risk case of the communication control system (5).

4. The method according to one of claims 1 to 3, wherein the communication network (4) is implemented within a cyber-physical system (9) and an automation system (8) generates process signals of the cyber-physical system (9), wherein the process signals comprise hazard parameters and/or status parameters of the cyber-physical system (9), wherein the process signals are transferred to the communication control system (5), and wherein the communication control system (5) monitors the occurrence of the situation-dependent condition (6) by means of the process signals.

5. The method according to claim 4, wherein a risk assessment system (13) carries out an operational and/or inter-operational risk assessment of the cyber-physical system (9) and determines a hazard level, wherein the determined hazard level is transferred to the communication control system (5), and wherein the communication control system (5) monitors the occurrence of the situation-dependent condition (6) on the basis of the determined hazard level.

6. Communication control system (5) for situation-dependent influencing of communication of at least one component (1, 2, 3) within a communication network (4), wherein the communication control system (5) distinguishes a plurality of communication scenarios (0, 1_1, ..., 2_2) which can be selected or are selected depending on a situation, wherein the communication control system (5) is configured to influence the communication of the component (1, 2, 3) depending on the respectively selected communication scenario (0, 1_1, ..., 2_2) in such a way that a communication content is changed or completely replaced by the communication control system (5) depending on the situation, wherein the communication control system (5) is configured to monitor the occurrence of a situation-dependent condition (6), wherein the occurrence of the situation-dependent condition (6) comprises one or more of the following events: an occurrence of an external condition (x) or a change of an external condition (x) outside the communication network (4), a change of state of the component (1, 2, 3) within the communication network (4), an exceeding of a predetermined time of day, an exceeding of a predetermined time duration of the existence of a selected communication scenario (0, 1_1, ..., 2_2), an exceeding of a predetermined point in time, an actuation of a switching device which differs from an activation or deactivation of the communication control system (5), and a signal from another communication control system (5), wherein the situation-dependent condition (6) differs from network parameters of the component (1, 2, 3) and/or communication parameters of the component (1, 2, 3) and/or a data traffic of the component (1, 2, 3) within the communication network (4), wherein the communication control system (5) is configured to trigger a change from a selected communication scenario (0, 1_1, ..., 2_2) to another communication scenario (0, 1_1, ..., 2_2) when the situation-dependent condition (6) occurs, and wherein the communication control system (5) is arranged to divide the communication content into different communication topics (T1, T2, T3,...) and to influence each communication topic (T1, T2, T3,...) separately depending on the respectively selected communication scenario (0, 1_1, ..., 2_2), wherein the different communication topics (T1, T2, T3, ....) each represent a sub-field of the communication of the at least one component and wherein communication topics (T1, T2, T3, ...) each relate to an individual communication of a specific software application in the at least one component and/or communication topics (T1, T2, T3, ...) are structured on the basis of an abstract grammar or high-level language.

7. The communication control system (5) according to claim 6, having a control logic (19) and a communication execution module (35), wherein the control logic (19) is configured to determine a communication scenario (0, 1_1, ..., 2_2) to be selected as a function of the present situation-dependent condition (6) in accordance with a preconfigured communication logic, and wherein the communication execution module (35) is configured to implement the communication scenario (0, 1_1, ..., 2_2) determined in the control logic (19).

8. The communication control system (5) according to one of claims 6 or 7, wherein a configuration of the communication scenarios (0, 1_1, ..., 2_2) is independent and/or separated from a configuration of network parameters of the component (1, 2, 3) or communication parameters of the component (1, 2, 3).

9. The communication control system (5) according to one of claims 6 to 8, wherein the communication control system (5) is configured to perform a self-diagnosis and to make a change from a selected communication scenario (0, 1_1, ..., 2_2) to a specially predetermined safety communication scenario if the self-diagnosis of the communication control system (5) results in a fault case or a risk case of the communication control system (5).

10. Communication network (4) having at least one component (1, 2, 3) which is configured for communication within the communication network (4), and having a communication control system (5) according to one of claims 6 to 9, the communication network (4) and/or the component (1, 2, 3) being configured to route the communication of the component (1, 2, 3) within the communication network (4) via the communication control system (5).

11. Cyber-physical system (9) with a communication network (4) according to claim 10 and with an automation system (8), wherein the automation system (8) is configured to generate process signals of the cyber-physical system (9), wherein the process signals comprise hazard parameters and/or status parameters of the cyber-physical system (9), wherein the cyber-physical system (9) is configured to transfer the process signals to the communication control system (5), and wherein the communication control system (5) is configured to monitor the occurrence of the situation-dependent condition (6) on the basis of the process signals.

12. The cyber-physical system (9) according to claim 11, further comprising a risk assessment system (13), wherein the risk assessment system (13) is configured to carry out an operational and/or inter-operational risk assessment of the cyber-physical system (9) and to determine a hazard level, wherein the cyber-physical system (9) is configured to transfer the determined hazard level to the communication control system (5), and wherein the communication control system (5) is configured to monitor the occurrence of the situation-dependent condition (6) on the basis of the determined hazard level.

## Revendications

1. Procédé pour influencer la communication d'au moins un composant (1, 2, 3) à l'intérieur d'un réseau de communication (4) en fonction de la situation,
dans lequel une communication du composant (1, 2, 3) à l'intérieur du réseau de communication (4) est acheminée via un système de contrôle de communication (5),
dans lequel le système de contrôle de communication (5) distingue une pluralité de scénarios de communication (0, 1_1, ..., 2_2) et sélectionne l'un des scénarios de communication (0, 1_1, ..., 2_2) en fonction d'une situation,
la communication du composant (1, 2, 3) étant influencée en fonction du scénario de communication sélectionné (0, 1_1, ..., 2_2) de manière à ce que la communication du composant (1, 2, 3) soit influencée en fonction du scénario de communication sélectionné (0, 1_1, ..., 2_2) de manière à ce qu'un contenu de communication soit modifié ou complètement remplacé par le système de contrôle de la communication (5) en fonction de la situation,
le système de contrôle de la communication (5) surveillant l'apparition d'une condition dépendant de la situation (6), la condition dépendant de la situation (6) différant des paramètres de réseau du composant (1, 2, 3) et/ou des paramètres de communication du composant (1, 2, 3) et/ou d'un trafic de données du composant (1, 2, 3) au sein du réseau de communication (4), et dans lequel l'occurrence de la condition dépendant de la situation (6) comprend un ou plusieurs des événements suivants : l'apparition d'une condition externe (x) ou la modification d'une condition externe (x) en dehors du réseau de communication (4), un changement d'état du composant (1, 2, 3) à l'intérieur du réseau de communication (4), le dépassement d'une heure prédéterminée de la journée, le dépassement d'une durée prédéterminée de la présence d'un scénario de communication sélectionné (0, 1_1, ..., 2_2), le dépassement d'un instant prédéterminée, l'actionnement d'un dispositif de commutation autre que l'activation ou la désactivation du système de contrôle de communication (5), et un signal provenant d'un autre système de contrôle de communication (5),
dans lequel le système de contrôle de communication (5) effectue la commutation d'un scénario de communication sélectionné (0, 1_1, ..., 2_2) à un autre scénario de communication (0, 1_1, ..., 2_2) lorsque la condition dépendant de la situation (6) se produit, et
dans lequel le contenu de la communication est divisé en différents sujets de communication (T1, T2, T3,....) et chaque sujet de communication (T1, T2, T3,...) est influencé séparément en fonction du scénario de communication respectivement sélectionné (0, 1_1, ..., 2_2), dans lequel les différents sujets de communication (T1, T2, T3,...) représentent chacun un sous-domaine de la communication d'au moins un composant et dans lequel les sujets de communication (T1, T2, T3, ...) se rapportent chacun à une communication individuelle d'une application logicielle spécifique dans l'au moins un composant et/ou les sujets de communication (T1, T2, T3, ...) sont structurés sur la base d'une grammaire abstraite ou d'un langage de haut niveau.

2. Procédé selon la revendication 1, dans laquelle une configuration des scénarios de communication (0, 1_1, ..., 2_2) est indépendante et/ou séparée d'une configuration des paramètres de réseau du composant (1, 2, 3) et/ou des paramètres de communication du composant (1, 2, 3).

3. Procédé selon l'une des revendications 1 ou 2, dans laquelle un autodiagnostic du système de contrôle des communications (5) est réalisé et un changement est effectué d'un scénario de communication sélectionné (0, 1_1, ..., 2_2) à un scénario de communication de sécurité spécialement prédéterminé si l'autodiagnostic du système de contrôle des communications (5) résulte en un cas d'erreur ou un cas de risque du système de contrôle des communications (5).

4. Procédé selon l'une des revendications 1 à 3, dans laquelle le réseau de communication (4) est mis en œuvre dans un système cyber-physique (9) et un système d'automatisation (8) génère des signaux de processus du système cyber-physique (9), dans lequel les signaux de processus comprennent des paramètres de danger et/ou des paramètres d'état du système cyber-physique (9), dans lequel les signaux de processus sont transférés au système de contrôle de la communication (5), et dans lequel le système de contrôle de la communication (5) surveille l'apparition de la condition dépendant de la situation (6) au moyen des signaux de processus.

5. Procédé selon la revendication 4, dans laquelle un système d'évaluation des risques (13) effectue une évaluation des risques opérationnels et/ou interopérationnels du système cyber-physique (9) et détermine un niveau de danger, dans laquelle le niveau de danger déterminé est transféré au système de contrôle des communications (5), et dans laquelle le système de contrôle des communications (5) surveille l'apparition de la condition dépendant de la situation (6) sur la base du niveau de danger déterminé.

6. Système de contrôle de communication (5) pour influencer la communication d'au moins un composant (1, 2, 3) dans un réseau de communication (4) en fonction de la situation, dans lequel le système de contrôle de communication (5) distingue plusieurs scénarios de communication (0, 1_1, ..., 2_2) qui peuvent être sélectionnés ou sont sélectionnés en fonction d'une situation,
dans lequel le système de contrôle de communication (5) est configuré pour influencer la communication du composant (1, 2, 3) en fonction du scénario de communication sélectionné (0, 1_1, ..., 2_2) de manière à ce qu'un contenu de communication soit modifié ou complètement remplacé par le système de contrôle de communication (5) en fonction de la situation (0, 1_1, ..., 2_2),
le système de contrôle de la communication (5) étant configuré pour surveiller l'apparition d'une condition dépendant de la situation (6), l'apparition de la condition dépendant de la situation (6) comprenant un ou plusieurs des événements suivants : l'apparition d'une condition externe (x) ou la modification d'une condition externe (x) en dehors du réseau de communication (4), un changement d'état du composant (1, 2, 3) à l'intérieur du réseau de communication (4), le dépassement d'une heure prédéterminée de la journée, le dépassement d'une durée prédéterminée de la présence d'un scénario de communication sélectionné (0, 1_1, ..., 2_2), le dépassement d'un instant prédéterminée, l'actionnement d'un dispositif de commutation autre que l'activation ou la désactivation du système de contrôle de communication (5), et un signal provenant d'un autre système de contrôle de communication (5),
dans lequel la condition dépendant de la situation (6) diffère des paramètres de réseau du composant (1, 2, 3) et/ou des paramètres de communication du composant (1, 2, 3) et/ou d'un trafic de données du composant (1, 2, 3) au sein du réseau de communication (4),
le système de contrôle de la communication (5) étant configuré pour effectuer la commutation d'un scénario de communication sélectionné (0, 1_1, ....2_2) à un autre scénario de communication (0, 1_1, ..., 2_2) lorsque la condition dépendante de la situation (6) se produit, et
dans lequel le système de contrôle de la communication (5) est configuré pour diviser le contenu de la communication en différents sujets de communication (T1, T2, T3, ...) et à influencer chaque sujet de communication (T1, T2, T3,...) séparément en fonction du scénario de communication sélectionné (0, 1_1, ..., 2_2), les différents sujets de communication (T1, T2, T3, ...) représentant chacun un sous-domaine de la communication d'au moins un composant et les sujets de communication (T1, T2, T3, ...) se rapportent chacun à une communication individuelle d'une application logicielle spécifique dans l'au moins un composant et/ou les sujets de communication (T1, T2, T3, ...) sont structurés sur la base d'une grammaire abstraite ou d'un langage de haut niveau.

7. Système de contrôle de communication (5) selon la revendication 6, comportant une logique de contrôle (19) et un module d'exécution de communication (35),
dans lequel la logique de contrôle (19) est configurée pour déterminer un scénario de communication (0, 1_1, ..., 2_2) à sélectionner en fonction de l'état actuel dépendant de la situation (6) conformément à une logique de communication préconfigurée, et
dans lequel le module d'exécution de communication (35) est configuré pour mettre en œuvre le scénario de communication (0, 1_1, ..., 2_2) déterminé dans la logique de contrôle (19).

8. Système de contrôle de la communication (5) selon l'une des revendications 6 ou 7, dans lequel une configuration des scénarios de communication (0, 1_1, ..., 2_2) est indépendante et/ou séparée d'une configuration des paramètres de réseau du composant (1, 2, 3) ou des paramètres de communication du composant (1, 2, 3).

9. Système de contrôle de communication (5) selon l'une des revendications 6 à 8, dans lequel le système de contrôle de communication (5) est configuré pour effectuer un autodiagnostic et pour passer d'un scénario de communication sélectionné (0, 1_1, ..., 2_2) à un scénario de communication de sécurité spécialement prédéterminé si l'autodiagnostic du système de contrôle de communication (5) résulte en un cas d'erreur ou un cas de risque du système de contrôle des communications (5).

10. Réseau de communication (4) comportant au moins un composant (1, 2, 3) configuré pour communiquer à l'intérieur du réseau de communication (4), et comportant un système de contrôle de la communication (5) selon l'une des revendications 6 à 9, le réseau de communication (4) et/ou le composant (1, 2, 3) étant configuré pour acheminer la communication du composant (1, 2, 3) à l'intérieur du réseau de communication (4) via le système de contrôle de la communication (5).

11. Système cyber-physique (9) avec un réseau de communication (4) selon la revendication 10 et avec un système d'automatisation (8), dans lequel le système d'automatisation (8) est configuré pour générer des signaux de processus du système cyber-physique (9),
dans lequel les signaux de processus comprennent des paramètres de danger et/ou des paramètres d'état du système cyber-physique (9), le système cyber-physique (9) est configuré pour transférer les signaux de processus au système de contrôle des communications (5), et
le système de contrôle des communications (5) est configuré pour surveiller l'apparition de la condition dépendant de la situation (6) sur la base des signaux de processus.

12. Système cyber-physique (9) selon la revendication 11, comprenant en outre un système d'évaluation des risques (13), dans lequel le système d'évaluation des risques (13) est configuré pour effectuer une évaluation des risques opérationnels et/ou inter-opérationnels du système cyber-physique (9) et pour déterminer un niveau de danger,
dans lequel le système cyber-physique (9) est configuré pour transférer le niveau de danger déterminé au système de contrôle des communications (5), et
dans lequel le système de contrôle des communications (5) est configuré pour surveiller l'apparition de la condition dépendant de la situation (6) sur la base du niveau de danger déterminé.
